# EUROPEAN PATENT SPECIFICATION

(11) **EP 3 070 888 B1**
(45) Date of publication and mention of the grant of the patent: **03.02.2021**
(21) Application number: 13899226.8
(22) Date of filing: 09.12.2013
(51) Int. Cl.: H04L 12/70, H04L 29/08, H04W 4/06

(54) **APPARATUS AND METHOD FOR CONTENT CACHE**
VORRICHTUNG UND VERFAHREN FÜR INHALTSZWISCHENSPEICHER
APPAREIL ET PROCÉDÉ DE MISE EN CACHE DE CONTENU

(43) Date of publication of application: 21.09.2016
(73) Proprietor: Huawei Technologies Co., Ltd., Longgang District Shenzhen, Guangdong 518129 (CN)
(72) Inventor: WU, Wenfu, Shenzhen Guangdong 518129 (CN)
(74) Representative: Epping - Hermann - Fischer
(86) International application number: PCT/CN2013/088891
(87) International publication number: WO 2015/085467

(56) References cited:
- CN-A- 1 816 018
- CN-A- 1 984 118
- US-A1- 2003 115 421
- US-A1- 2007 133 588
- US-A1- 2009 070 533
- US-A1- 2012 297 033
- US-A1- 2013 272 305
- LIU H LI O HUANG HUAWEI TECHNOLOGIES M BOUCADAIR FRANCE TELECOM N LEYMANN DEUTSCHE TELEKOM AG Z CAO W: "Service Function Chaining Use Cases; draft-liu-sfc-use-cases-00.txt", SERVICE FUNCTION CHAINING USE CASES; DRAFT-LIU-SFC-USE-CASES-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 10 October 2013 (2013-10-10), pages 1-14, XP015095146, [retrieved on 2013-10-10]

## Description

### TECHNICAL FIELD

The present invention relates to the communications filed, and in particular, to an apparatus and a method for content caching.

### BACKGROUND

In recent years, Internet applications grow at an unprecedented speed, and a mass of end user equipments (User Equipment, "UE" for short) send service requests, which therefore strains broadband resources. The service requests of the user equipments often cause a delay to a certain degree, and a slow response speed impairs user experience of the Internet applications. To resolve the foregoing problems, a researcher proposes a content caching technology. A mobile operator provides a medium between UE and an Internet content provider, so as to directly respond to a request of the user equipment as much as possible, reduce a response waiting time for the user equipment, and improve user experience. Generally, the mobile operator collects statistics about an amount of related content required by the UE, and caches, to a service node, related content that is in relatively high demand and that is on the Internet content provider. After the UE requests to access the related content, the service node may directly send the related content to the UE.

However, with diversification of user groups, content required by users becomes more complex and diversified, and different demands of current different user groups already cannot be satisfied by caching content to a service node only according to an amount of content in demand. How to cache diversified content to a service node is an urgent problem to resolve currently.

US 20120297033 A1 discloses techniques for the distribution of content objects in a content delivery network (CDN). A CDN distribution server detects a content object's availability and determines whether the content object is a candidate for distribution. The distribution server detects the availability of the content object in response to a provider making new or updated content available at a content site or a location within the CDN. The distribution server obtains identifying information for a candidate content object and determines a select portion of the content object to be distributed within the CDN. The select portion can be a predetermined number of bytes located at a predetermined position in the content object, the size and location of which may be determined according to content-specific mapping data. The distribution server pushes the select portion of the content object to one or more groups of CDN edge servers absent an end-user request.

US 20090070533 A1 is related to content delivery systems and methods. In one aspect, a content provider controls a replacement process operating at an edge server. The edge server services content providers and has a data store for storing content associated with respective ones of the content providers. A content provider sets a replacement policy at the edge server that controls the movement of content associated with the content provider, into and out of the data store. In another aspect, a content delivery system includes a content server storing content files, an edge server having cache memory for storing content files, and a replacement policy module for managing content stored within the cache memory. The replacement policy module can store portions of the content files at the content server within the cache memory, as a function of a replacement policy set by a content owner.

### SUMMARY

Embodiments of the present invention provide an apparatus and methods for content caching as defined in the claims, which can resolve a content caching problem of diversified content.

According to a first aspect, an apparatus for content caching is provided, including: an acquiring module, configured to acquire content caching request information sent by a content server, and acquire identifier information of a service node having a content caching function according to the content caching request information; a processing module, configured to construct traffic forwarding policy information and traffic classification policy information according to the identifier information of the service node having a content caching function; and a sending module, configured to send the traffic classification policy information to a traffic classifier, so that the traffic classifier sends a content packet to a switch according to the traffic classification policy information; and send the traffic forwarding policy information to the switch, so that after receiving the content packet, the switch sends, according to the traffic forwarding policy information, the content packet to the service node having a content caching function to perform content caching.

With reference to the first aspect, in a first possible implementation manner, the processing module being configured to construct traffic forwarding policy information according to the
identifier information of the service node having a content caching function includes: the processing module being configured to construct service chain forwarding table information that includes the identifier information of the service node having a content caching function; and the processing module being configured to construct the traffic forwarding policy information, where the traffic forwarding policy information includes the service chain forwarding table information.

With reference to the first possible implementation manner of the first aspect, in a second possible implementation manner, the processing module is further configured to generate content caching processing information according to the content caching request information; and the service chain forwarding table information constructed by the processing module further includes the content caching processing information.

With reference to the first possible implementation manner of the first aspect, in a third possible implementation manner, the content caching request information acquired by the acquiring module includes identifier information of the content server, or identifier information of the content server and a content identifier; the processing module is further configured to generate service traffic information according to the identifier information of the content server and address information of the service node having a content caching function; the traffic forwarding policy information constructed by the processing module includes the service chain forwarding table and the service traffic information, or the service chain forwarding table information, the service traffic information, and the content identifier; and a traffic classification policy constructed by the processing module includes the service traffic information, or the service traffic information and the content identifier.

With reference to the third possible implementation manner of the first aspect, in a fourth possible implementation manner, the processing module is further configured to generate the service chain forwarding table identifier according to the service traffic information or the service traffic information and the content identifier; the traffic forwarding policy information constructed by the processing module includes the service chain forwarding table information and the service chain forwarding table identifier; and the traffic classification policy information constructed by the processing module includes the service traffic information and the service chain forwarding table identifier, or the service traffic information, the content identifier, and the service chain forwarding table identifier.

With reference to the first aspect, in a fifth possible implementation manner, the sending module is further configured to send the content caching request information to the service node having a content caching function, so that the service node constructs Hypertext Transfer Protocol HTTP acquiring information according to the content caching request information, and requests to acquire the content packet from the content server.

With reference to the first aspect, in a sixth possible implementation manner, the acquiring module being configured to acquire content caching request information sent by a content server specifically includes: the acquiring module is specifically configured to acquire the content caching request information directly sent by the content server; or acquire service chain information that is sent by the content server by using a service chain management system, where the service chain information includes the content caching request information.

According to a second aspect, another apparatus for content caching is provided, including: a receiving module, configured to receive a traffic classification policy sent by a controller, where the traffic classification policy information is constructed by the controller according to identifier information of a service node having a content caching function, and the receiving module is further configured to receive a content packet sent by a content server; and a processing module, configured to send, according to the traffic classification policy information, the content packet to a switch that is connected to the service node having a content caching function.

With reference to the second aspect, in a first possible implementation manner, the traffic classification policy information received by the receiving module includes service traffic information and a service chain forwarding table identifier, or includes service traffic information, a content identifier, and a service chain forwarding table identifier; and the processing module being configured to send, according to the traffic classification policy information, the content packet to a switch that is connected to the service node having a content caching function includes: the processing module being configured to acquire the service chain forwarding table identifier in the traffic classification policy information, encapsulate the service chain forwarding table identifier into a packet header of the content packet, and send the encapsulated content packet to the switch that is connected to the service node having a content caching function.

With reference to the second aspect, in a second possible implementation manner, the processing module is further configured to: before acquiring the service chain forwarding table identifier in the traffic classification policy information, acquire the service traffic information in the content packet and determine the traffic classification policy of the content packet according to the service traffic information; or the processing module is further configured to: before acquiring the service chain forwarding table identifier in the traffic classification policy information, acquire the service traffic information and the content identifier that are in the content packet, and determine the traffic classification policy information of the content packet according to the service traffic information and the content identifier.

According to a third aspect, an apparatus for content caching is provided, including: a receiving module, configured to receive traffic forwarding policy information sent by a controller, where the traffic forwarding policy information is constructed by the controller according to identifier information of a service node having a content caching function, and includes service chain forwarding table information, and the receiving module is further configured to receive a content packet sent by a traffic classifier; and a sending module, configured to send, according to the service chain forwarding table information in the traffic forwarding policy information, the content packet to the service node having a content caching function to perform content caching.

With reference to the third aspect, in a first possible implementation manner, the traffic forwarding policy information further includes a service chain forwarding table identifier; the content packet received by the receiving module includes the service chain forwarding table identifier that is encapsulated by the traffic classifier into a packet header of the content packet; and the apparatus further includes a processing module, where the processing module is configured to determine the traffic forwarding policy according to the service chain forwarding table identifier.

With reference to the third aspect, in a second possible implementation manner, the traffic forwarding policy information further includes service traffic information or service traffic information and a content identifier; and the apparatus further includes a processing module, where the processing module is configured to acquire the service traffic information in the content packet, and determine the traffic forwarding policy information of the content packet according to the service traffic information in the content packet; or
the processing module is configured to acquire the service traffic information and the content identifier that are in the content packet, and determine the traffic forwarding policy information of the content packet according to the service traffic information and the content identifier that are in the content packet.

According to a fourth aspect, another apparatus for content caching is provided, including: a construction module, configured to construct content caching request information; a sending module, configured to send the content caching request information to a controller to request to perform content caching; and a receiving module, configured to receive content packet request information to request to send a content packet, where the sending module is further configured to send the content packet to a traffic classifier, for content caching.

With reference to the fourth aspect, in a first possible implementation manner, the content caching request information constructed by the construction module includes identifier information of a content server, and is used to request to perform content caching for all content packets on the content server; or the content caching request information includes identifier information of a content server and a content identifier, and is used to request to perform content caching for a specific content packet on the content server.

With reference to the fourth aspect, in a second possible implementation manner, the sending module being configured to send the content caching request information specifically includes: the sending module being configured to directly send the content caching request information to the controller; or the sending module being configured to send the content caching request information to the controller by using a service chain management system.

With reference to the fourth aspect, in a third possible implementation manner, the receiving module being configured to receive content packet request information specifically includes: the receiving module being configured to receive HTTP acquiring information that is constructed by a service node having a content caching function, where source IP address information of the HTTP acquiring information is identifier information of the service node having a content caching function, and destination IP address information of the HTTP acquiring information is address information of the apparatus, and is used to request the content packet of a content server; and source IP address information of the content packet that is sent by the sending module to the traffic classifier is identifier information of the content server, and destination address information of the content packet is identifier information of the service node having a content caching function.

With reference to the fourth aspect, in a fourth possible implementation manner, the receiving module being configured to receive content packet request information specifically includes: the receiving module being configured to receive content caching response information sent by the controller or a service chain management system, where the content caching response information includes identifier information of a service node having a content caching function, and is used to request the content packet of a content server; and source IP address information of the content packet that is sent by the sending module to the traffic classifier is identifier information of the content server, and destination IP address information of the content packet is the identifier information of the service node having a content caching function.

According to a fifth aspect, a method for content caching is provided, including: receiving, by a controller, content caching request information sent by a content server; acquiring, by the controller according to the content caching request information, identifier information of a service node having a content caching function; constructing, by the controller, traffic forwarding policy information and traffic classification policy information according to the identifier information of the service node having a content caching function; sending, by the controller, the traffic classification policy information to a traffic classifier, so that the traffic classifier sends a content packet to a switch according to the traffic classification policy information; and sending, by the controller, the traffic forwarding policy information to the switch, so that after receiving the content packet, the switch sends, according to the traffic forwarding policy information, the content packet to the service node having a content caching function to perform content caching.

With reference to the fifth aspect, in a first possible implementation manner, the constructing, by the controller, traffic forwarding policy information according to the identifier information of the service node having a content caching function includes: constructing, by the controller, service chain forwarding table information that includes the identifier information of the service node having a content caching function; and constructing, by the controller, the traffic forwarding policy information including the service chain forwarding table information.

With reference to the first possible implementation manner of the fifth aspect, in a second possible implementation manner, before the constructing, by the controller, service chain forwarding table information, the method further includes: generating, by the controller, content caching processing information according to a content caching request, where the service chain forwarding table information constructed by the controller further includes the content caching processing information.

With reference to the first possible implementation manner of the fifth aspect, in a third possible implementation manner, the content caching request information includes identifier information of the content server, or identifier information of the content server and a content identifier; and before the constructing, by the controller, the traffic classification policy information and the traffic forwarding policy information including the service chain forwarding table information, the method further includes: generating, by the controller, service traffic information according to the identifier information of the content server and address information of the service node having a content caching function, where the traffic forwarding policy information constructed by the controller includes the service chain forwarding table and the service traffic information, or the service chain forwarding table information, the service traffic information, and the content identifier; and a traffic classification policy constructed by the controller includes the service traffic information, or the service traffic information and the content identifier.

With reference to the third possible implementation manner of the fifth aspect, in a fourth possible implementation manner, the method further includes: generating, by the controller, the service chain forwarding table identifier according to the service traffic information, or the service traffic chain information and the content identifier, where the traffic forwarding policy information constructed by the controller includes the service chain forwarding table information and the service chain forwarding table identifier; and the traffic classification policy information constructed by the controller includes the service traffic information and the service chain forwarding table identifier, or the service traffic information, the content identifier, and the service chain forwarding table identifier.

With reference to the fifth aspect, in a sixth possible implementation manner, the method further includes:
sending, by the controller, the content caching request information to the service node having a content caching function, so that the service node constructs HTTP acquiring information according to the content caching request information, and requests to acquire the content packet from the content server.

With reference to the fifth aspect, in a seventh possible implementation manner, the receiving, by a controller, content caching request information sent by a content server includes: receiving, by the controller, the content caching request information directly sent by the content server; or receiving the content caching request information that is sent by the content server by using a service chain management system.

According to a sixth aspect, another method for content caching is provided, including: receiving, by a traffic classifier, traffic classification policy information sent by a controller, where the traffic classification policy information is constructed by the controller according to identifier information of a service node having a content caching function; receiving, by the traffic classifier, a content packet sent by a content server; and sending, by the traffic classifier according to the traffic classification policy information, the content packet to a switch that is connected to the service node having a content caching function.

With reference to the sixth aspect, in a first possible implementation manner, the traffic classification policy information received by the traffic classifier includes service traffic information and a service chain forwarding table identifier, or includes service traffic information, a content identifier, and a service chain forwarding table identifier; and the sending, by the traffic classifier according to the traffic classification policy information, the content packet to a switch that is connected to the service node having a content caching function includes: acquiring, by the traffic classifier, the service chain forwarding table identifier in the traffic classification policy information; encapsulating, by the traffic classifier, the service chain forwarding table identifier into a packet header of the content packet; and sending, by the traffic classifier, the encapsulated content packet to the switch that is connected to the service node having a content caching function.

With reference to the first possible implementation manner of the sixth aspect, in a second possible implementation manner, before the acquiring, by the traffic classifier, the service chain forwarding table identifier in the traffic classification policy information, the method includes: acquiring, by the traffic classifier, the service traffic information in the content packet; and determining, by the traffic classifier, a traffic classification policy of the content packet according to the service traffic information; or acquiring, by the traffic classifier, the service traffic information and the content identifier that are in the content packet, and determining, by the traffic classifier, the traffic classification policy information of the content packet according to the service traffic information and the content identifier.

According to a seventh aspect, another method for content caching is provided, including: receiving, by a switch, traffic forwarding policy information sent by a controller, where the traffic classification policy information is constructed by the controller according to identifier information of a service node having a content caching function, and includes service chain forwarding table information; receiving, by the switch, a content packet sent by a traffic classifier; and sending, by the switch according to the service chain forwarding table information, the content packet to the service node having a content caching function to perform content caching.

With reference to the seventh aspect, in a first possible implementation manner, the traffic forwarding policy information further includes a service chain forwarding table identifier; the content packet received by the switch includes the service chain forwarding table identifier that is encapsulated by the traffic classifier into a packet header of the content packet; and the method further includes: determining, by the switch, the traffic forwarding policy according to the service chain forwarding table identifier.

With reference to the seventh aspect, in a second possible implementation manner, the traffic forwarding policy information further includes service traffic information or service traffic information and a content identifier; and the method further includes: acquiring, by the switch, the service traffic information in the content packet; and determining, by the switch, the traffic forwarding policy information of the content packet according to the service traffic information in the content packet; or acquiring, by the switch, the service traffic information and the content identifier that are in the content packet, and determining, by the switch, the traffic forwarding policy information of the content packet according to the service traffic information and the content identifier that are in the content packet.

According to an eighth aspect, another method for content caching is provided, including: constructing, by a content server, content caching request information; sending, by the content server, the content caching request information to a controller to request to perform content caching; receiving, by the content server, content packet request information to request to send a content packet; and sending, by the content server, the content packet to a traffic classifier, for content caching.

With reference to the eighth aspect, in a first possible implementation manner, the content caching request information constructed by the content server specifically includes identifier information of the content server, or identifier information of the content server and a content identifier.

With reference to the eighth aspect, in a second possible implementation manner, the sending, by the content server, the content caching request information to a controller includes: directly sending, by the content server, the content caching request information to the controller; or sending, by the content server, the content caching request information to the controller by using a service chain management system.

With reference to the eighth aspect, in a third possible implementation manner, the receiving, by the content server, content packet request information includes: receiving, by the content server, HTTP acquiring information that is constructed by a service node having a content caching function, where source IP address information of the HTTP acquiring information is identifier information of the service node having a content caching function, and destination IP address information of the HTTP acquiring information is address information of the apparatus, and is used to request the content packet from the content server; and source IP address information of the content packet that is sent by the content server to the traffic classifier is identifier information of the content server, and destination address information of the content packet is the identifier information of the service node having a content caching function.

With reference to the eighth aspect, in a fourth possible implementation manner, the receiving, by the content server, content packet request information includes: receiving, by the content server, content caching response information sent by the controller or a service chain management system, where source IP address information of the content caching response information is identifier information of a service node having a content caching function, and destination IP address information of the content caching response information is address information of the apparatus, and is used to request the content packet from the content server; and source IP address information of the content packet that is sent by the content server to the traffic classifier is identifier information of the content server, and destination IP address information of the content packet is the identifier information of the service node having a content caching function.

Based on the foregoing technical solutions, in the apparatus and method for content caching that are provided in the embodiments of the present invention, content caching request information sent by a content server is received, a traffic forwarding policy and a traffic classification policy are constructed, and a content packet on the content server is cached to a service node having a content caching function, so that diversified content can be cached to a service node, an Internet content response delay can be reduced, and user experience can be improved.

### BRIEF DESCRIPTION OF DRAWINGS

To describe the technical solutions in the embodiments of the present invention more clearly, the following briefly describes the accompanying drawings required for describing the embodiments of the present invention or the prior art. Apparently, the accompanying drawings in the following description show merely some embodiments of the present invention, and a person of ordinary skill in the art may still derive other drawings from these accompanying drawings without creative efforts.
FIG. 1 shows a schematic diagram of a network architecture on which an embodiment of the present invention is based;
FIG. 2 shows a schematic block diagram of an apparatus for content caching according to an embodiment of the present invention;
FIG. 3 shows a schematic block diagram of another apparatus for content caching according to an embodiment of the present invention;
FIG. 4 shows a schematic block diagram of another apparatus for content caching according to an embodiment of the present invention;
FIG. 5 shows a schematic block diagram of another apparatus for content caching according to an embodiment of the present invention;
FIG. 6 shows a schematic flowchart of a method for content caching according to an embodiment of the present invention;
FIG. 7 shows a schematic flowchart of another method for content caching according to an embodiment of the present invention;
FIG. 8 shows a schematic flowchart of another method for content caching according to an embodiment of the present invention;
FIG. 9 shows a schematic flowchart of another method for content caching according to an embodiment of the present invention;
FIG. 10 shows a signaling interworking diagram of a method for content caching according to an embodiment of the present invention;
FIG. 11 shows a signaling interworking diagram of another method for content caching according to an embodiment of the present invention;
FIG. 12 shows a signaling interworking diagram of another method for content caching according to an embodiment of the present invention; and
FIG. 13 shows a signaling interworking diagram of another method for content caching according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

It should be understood that, the technical solutions in the embodiments of the present invention may be applied to various communications systems, such as the Global System for Mobile Communications (Global System of Mobile communication, "GSM" for short), a Code Division Multiple Access (Code Division Multiple Access, "CDMA" for short) system, a Wideband Code Division Multiple Access (Wideband Code Division Multiple Access, "WCDMA" for short) system, a general packet radio service (General Packet Radio Service, "GPRS" for short), a Long Term Evolution (Long Term Evolution, "LTE" for short) system, an LTE frequency division duplex (Frequency Division Duplex, "FDD" for short) system, an LTE time division duplex (Time Division Duplex, "TDD" for short), the Universal Mobile Telecommunications System (Universal Mobile Telecommunication System, "UMTS" for short), and a Worldwide Interoperability for Microwave Access (Worldwide Interoperability for Microwave Access, "WiMAX" for short) communications system.

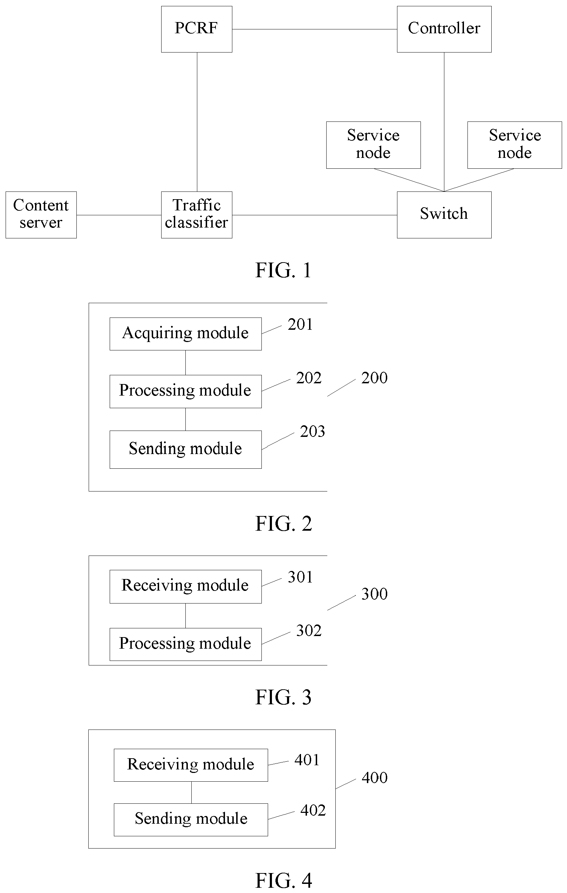

FIG. 1 shows a schematic diagram of a network architecture on which an embodiments of the present invention is based. It should be understood that the network architecture shown in FIG. 1 is an application architecture for this embodiment of the present invention, but this embodiment of the present invention is not limited thereto.

FIG. 1 shows the schematic diagram of the network architecture including a content server, a traffic classifier, a switch, a policy and charging rules function (Policy and Charging Rule Function, "PCRF" for short) entity, a controller, and a service node. The controller is mainly configured to control service chain processing of a service flow by constructing a policy. The traffic classifier is a logical network element, which may be integrated into a gateway device, or may be an independent device, and is mainly used to detect a content packet. The switch is mainly configured to perform routing processing on a content packet. The content server is a server at which a content resource of an Internet content provider is located. The service node is mainly used to perform service processing on a content packet, and a same service node may have multiple functions such as content caching and video optimization, which are not limited in the present invention.

FIG. 2 shows a schematic block diagram of an apparatus for content caching according to an embodiment of the present invention. The apparatus for content caching may be a controller, which is not limited in the present invention.

As shown in FIG. 2, the apparatus 200 for content caching provided in this embodiment of the present invention includes:
an acquiring module 201, configured to acquire content caching request information sent by a content server, and acquire identifier information of a service node having a content caching function according to the content caching request information, where
the identifier information of the service node may include address information of the service node; for other embodiments of the present invention, refer to this embodiment of the present invention, and details are not described herein;
a processing module 202, configured to construct traffic forwarding policy information and traffic classification policy information according to the identifier information of the service node having a content caching function, where
the processing module 202 is specifically configured to construct service chain forwarding table information that includes the identifier information of the service node having a content caching function, and is configured to construct the traffic forwarding policy information, where the traffic forwarding policy information includes the service chain forwarding table information, and the service chain forwarding table information may be used to indicate, after a switch receives a content packet, a next destination of the content packet to the switch; and
a sending module 203, configured to send the traffic classification policy information to a traffic classifier, so that the traffic classifier sends the content packet to the switch according to the traffic classification policy information; and send the traffic forwarding policy information to the switch, so that after receiving the content packet, the switch sends, according to the traffic forwarding policy information, the content packet to the service node having a content caching function to perform content caching.

Therefore, based on the apparatus for content caching provided in this embodiment of the present invention, content caching is performed for related content according to a content request of a content provider, so that diversified content can be cached to a service node, thereby reducing a content response delay and improving user experience.

Further, with the rapid development of Internet applications, Internet content providers, for example, some online video content providers such as YouTube and Youku, expect to use a content caching technology to reduce a service response delay, thereby improving user experience and attracting more user groups. A mobile operator opens up a content caching service to an Internet content provider, and may charge the content provider on such a basis, thereby increasing an income of the mobile operator. Therefore, based on the technical solution provided in this embodiment of the present invention, a problem of how to open up the content caching service to the content provider is resolved, so that the content provider can send a content caching request to request to perform a content caching service, and the mobile operator can open up the content caching service to the Internet content provider and may charge the content provider on such a basis, thereby increasing an income of the mobile operator.

In another embodiment of the present invention, the processing module 202 is specifically configured to construct the service chain forwarding table information that includes the identifier information of the service node having a content caching function; in addition, optionally, the processing module 202 is further configured to generate content caching processing information according to the content caching request information; and the service chain forwarding table information constructed by the processing module 202 further includes the content caching processing information. An objective of generating the content caching processing information by the processing module 202 is that when the service node having a content caching processing function further includes another function, for example, video optimization, when sending the content packet to the service node according to the service chain forwarding table information, the switch sends the content packet to the service node to perform content caching.

Specifically, the content caching request information acquired by the acquiring module 201 includes identifier information of the content server, or identifier information of the content server and a content identifier. When the content server initiates a content caching request, and when content for which content caching is requested is entire content on the content server, the content caching request information includes the identifier information of the content server, where the identifier information of the content server may be address information, a fully qualified domain name (Fully Qualified Domain Name), or the like of the content server, and for the identifier information of the content server in other embodiments of the present invention, refer to the identifier information of the content server in this embodiment of the present invention. When content for which the content server initiates the content caching request is specific content on the content server, for example, a video, the content of the content caching request further includes the content identifier, where the content identifier is used to identify the specific content on the content server, and may be a uniform resource locator (Uniform Resource Locator, "URL" for short) or a uniform resource identifier (Uniform Resource Identifier, "URI" for short). That is, the content server may request diversified and different content to be cached. The processing module 202 is further configured to generate service traffic information according to the identifier information of the content server and the address information of the service node having a content caching function; where the traffic forwarding policy information constructed by the processing module 202 includes the service chain forwarding table and the service traffic information, or the service chain forwarding table information, the service traffic information, and the content identifier; and a traffic classification policy constructed by the processing module 202 includes the service chain forwarding table and the service traffic information, or the service chain forwarding table information, the service traffic information, and the content identifier. When the content server initiates a content caching request, and when content for which content caching is requested is the entire content on the content server, the content caching request information includes the identifier information of the content server. When content for which the content server initiates the content caching request is specific content on the content server, for example, a video, the content of the content caching request further includes the content identifier, where the content identifier is used to identify the specific content on the content server, and may be a URL or a URI.

In still another embodiment of the present invention, the processing module 202 is configured to construct the service chain forwarding table information that includes the identifier information of the service node having a content caching function, and is configured to generate the service traffic information according to the identifier information of the content server and the address information of the service node having a content caching function. In addition, the processing module 202 is further configured to generate the service chain forwarding table identifier according to the service traffic information or the service traffic information and the content identifier, where the traffic forwarding policy information constructed by the processing module 202 includes the service chain forwarding table information and the service chain forwarding table identifier; and the traffic classification policy information constructed by the processing module 202 includes the service chain forwarding table, the service traffic information, and the service chain forwarding table identifier, or the service chain forwarding table information, the service traffic information, the content identifier, and the service chain forwarding table identifier.

Optionally, the sending module 203 is further configured to send the content caching request information to the service node having a content caching function, so that the service node constructs Hypertext Transfer Protocol (Hypertext transfer protocol, "HTTP" for short) acquiring information according to the content caching request information, and requests to acquire the content packet from the content server. The service node may construct the HTTP acquiring information according to the identifier information of the content server and the content identifier that are in the content caching request information, where the HTTP acquiring information includes the content identifier, a source IP address of the HTTP acquiring information is the identifier information of the service node having a content caching function, and a destination IP address of the HTTP acquiring information is the identifier information of the content server. The service node sends the HTTP acquiring information to the content server, and the content server sends the content packet of the content identifier to the traffic classifier.

That an acquiring module 201 is configured to acquire content caching request information sent by a content server, and acquire identifier information of a service node having a content caching function specifically includes: the acquiring module 201 is specifically configured to acquire the content caching request information directly sent by the content server; or acquire service chain information that is sent by the content server by using a service chain management system, where the service chain information includes the content caching request information. The content server may directly send the content caching request information to a controller, or send the content caching request information to the service chain management system, and the service chain management system generates the service chain information according to the content caching request information, where the service chain information includes the content caching request information and content caching processing information. In actual deployment, the service chain management system may be implemented in the controller, or may be implemented in a network element with an open-up capability, or may be implemented by means of independent deployment, which is not limited in the present invention, and a name of the service chain management system is not limited either.

FIG. 3 shows a schematic block diagram of another apparatus for content caching according to an embodiment of the present invention. The apparatus may be a traffic classifier, which is not limited in this embodiment of the present invention. The apparatus provided in this embodiment of the present invention may be used with the apparatus shown in FIG. 2.

As shown in FIG. 3, the apparatus 300 for content caching provided in this embodiment of the present invention includes:
a receiving module 301, configured to receive a traffic classification policy sent by a controller, where
the traffic classification policy information is constructed by the controller according to identifier information of a service node having a content caching function, and
the receiving module 301 is further configured to receive a content packet sent by a content server; and
a processing module 302, configured to send, according to the traffic classification policy information, the content packet to a switch that is connected to the service node having a content caching function.

In S302, the processing module 302 is configured to send, according to the traffic classification policy information, the user packet to the switch that is connected to the service node having a content caching function, so that the switch sends the user data packet to the service node having a content caching function according to traffic forwarding policy information that is constructed by the controller according to the identifier information of the service node having a content caching function.

The traffic classification policy information may include service traffic information and a service chain forwarding table identifier, or include service traffic information, a content identifier, and a service chain forwarding table identifier; and that a processing module 302 is configured to send, according to the traffic classification policy information, the content packet to a switch that is connected to the service node having a content caching function includes: the processing module 302 is configured to acquire the service chain forwarding table identifier in the traffic classification policy information, encapsulate the service chain forwarding table identifier into a packet header of the content packet, and send the encapsulated content packet to the switch that is connected to the service node having a content caching function.

Further, the processing module 302 is further configured to: before acquiring the service chain forwarding table identifier in the traffic classification policy information, acquire the service traffic information in the content packet and determine the traffic classification policy of the content packet according to the service traffic information; or the processing module 302 is further configured to: before acquiring the service chain forwarding table identifier in the traffic classification policy information, acquire the service traffic information and the content identifier that are in the content packet, and determine the traffic classification policy information of the content packet according to the service traffic information and the content identifier.

Therefore, based on the apparatus for content caching provided in this embodiment of the present invention, a content packet may be sent, according to traffic forwarding policy information that is sent by a controller and that is generated by the controller according to identifier information of a service node having a content caching function, to a switch that is connected to the service node having a content caching function, so that the content packet can be sent by the switch to the service node having a content caching function, ensuring that content caching processing for a content packet sent by a content server can be performed. Therefore, a problem of caching, to the service node, diversified content for which a content server requests to perform content caching is resolved, a response delay of related content is reduced, and user experience is improved.

FIG. 4 shows a schematic block diagram of another apparatus for content caching according to an embodiment of the present invention. The apparatus may be a switch, which is not limited in this embodiment of the present invention. The apparatus provided in this embodiment of the present invention may be used with the apparatuses shown in FIG. 2 and FIG. 3.

As shown in FIG. 4, another apparatus 400 for content caching provided in this embodiment of the present invention includes:
a receiving module 401, configured to receive traffic forwarding policy information sent by a controller, where
the traffic forwarding policy information is constructed by the controller according to identifier information of a service node having a content caching function, and includes service chain forwarding table information,
the receiving module 401 is further configured to receive a content packet sent by a traffic classifier, and
the traffic classifier sends the user data packet to a switch according to traffic classification policy information sent by the controller, where the traffic classification policy information is constructed by the controller according to the identifier information of the service node having a content caching function; and
a sending module 402, configured to send, according to the service chain forwarding table information in the traffic forwarding policy information, the content packet to the service node having a content caching function to perform content caching.

In another embodiment of the present invention, the traffic forwarding policy information not only includes the service chain forwarding table information, but also includes a service chain forwarding table identifier. Before this, the traffic classifier encapsulates the service chain forwarding table identifier in the traffic classification policy information into the content packet, and sends the encapsulated content packet to the apparatus. A processing module in the apparatus is configured to determine the traffic forwarding policy information of the content packet according to the service chain forwarding table identifier in the content packet. The sending module 402 in the apparatus is configured to send, according to the service chain forwarding table information in the traffic forwarding policy information, the content packet to the service node having a content caching function to perform content caching. In this case, the apparatus processes a case in which the traffic forwarding policy information includes the service chain forwarding table identifier.

In still another embodiment of the present invention, the traffic forwarding policy information not only includes the service chain forwarding table information, but also includes service traffic information or service traffic information and a content identifier. The apparatus includes a processing module, where the processing module is configured to acquire the service traffic information in the content packet, and determine the traffic forwarding policy information of the content packet according to the service traffic information in the content packet; or the processing module is configured to acquire the service traffic information and the content identifier that are in the content packet, and determine the traffic forwarding policy information of the content packet according to the service traffic information and the content identifier that are in the content packet.

Therefore, based on the apparatus for content caching provided in this embodiment of the present invention, the apparatus receives traffic forwarding policy information that is sent by a controller and that is constructed according to identifier information of a service node having a content caching function, and sends, according to the traffic forwarding policy information, a content packet to the service node having a content caching function to perform content caching, implementing content caching for a content packet sent by a content server. Therefore, a problem of caching, to the service node, diversified content requested by the content server is resolved, a response delay of related content is reduced, and user experience is improved. In addition, a content caching service is opened up to an Internet content provider, so that a mobile operator may also charge the content provider based on the content caching service opened up to the content provider, thereby increasing an income of the mobile operator.

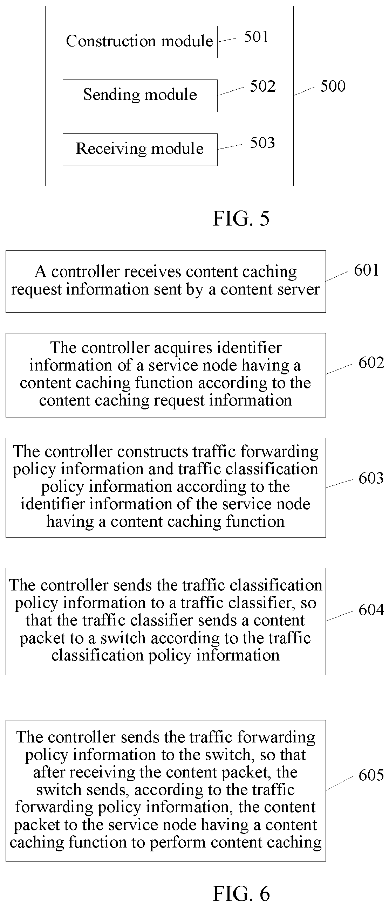

FIG. 5 shows a schematic block diagram of another apparatus for content caching according to an embodiment of the present invention. The apparatus provided in this embodiment of the present invention may be a content server, but the present invention is not limited thereto. The apparatus provided in this embodiment of the present invention may be used with the apparatus provided in FIG. 2.

As shown in FIG. 5, another apparatus 500 for content caching provided in this embodiment of the present invention includes:
a construction module 501, configured to construct content caching request information;
a sending module 502, configured to send the content caching request information to a controller to request to perform content caching; and
a receiving module 503, configured to receive content packet request information to request to send a content packet, where
the sending module 502 is further configured to send the content packet to a traffic classifier, so that the traffic classifier sends, according to traffic classification policy information that is sent by the controller and that is constructed according to identifier information of a service node having a content caching function, the content packet to a switch that is connected to the service node having a content caching function.

The content caching request information includes identifier information of a content server, and is used to request to perform content caching for all content packets on the content server; or the content caching request information includes identifier information of a content server and a content identifier, and is used to request to perform content caching for a specific content packet on the content server. Based on this, an Internet content provider may request content caching to be performed for diversified and different content packets.

That a sending module 502 is configured to send the content caching request information specifically includes: the sending module 502 is configured to directly send the content caching request information to the controller; or the sending module 502 is configured to send the content caching request information to the controller by using a service chain management system.

That a receiving module 503 is configured to receive content packet request information specifically includes: the receiving module 503 is configured to receive HTTP acquiring information that is constructed by the service node having a content caching function, where source IP address information of the HTTP acquiring information is the identifier information of the service node having a content caching function, and destination IP address information of the HTTP acquiring information is address information of the apparatus, and is used to request the content packet of a content server; and the HTTP acquiring information is constructed by the service node having a content caching function, so that the service node sends the HTTP acquiring information to the content server to request the content server to send the content packet. Source IP address information of the content packet that is sent by the sending module 502 to the traffic classifier is address information of the content server, and destination address information of the content packet is the identifier information of the service node having a content caching function.

Alternatively, that a receiving module 503 is configured to receive content packet request information specifically includes: the receiving module 503 is configured to receive content caching response information sent by the controller or a service chain management system, where source IP address information of the content caching response information is the identifier information of the service node having a content caching function, and destination IP address information of the content caching response information is address information of the apparatus, and is used to request the content packet from the content server; and source IP address information of the content packet that is sent by the sending module 502 to the traffic classifier is address information of the content server, and destination IP address information of the content packet is the identifier information of the service node having a content caching function.

Therefore, based on the apparatus for content caching provided in this embodiment of the present invention, content caching request information is sent to the controller to request to perform content caching, and a related content packet is sent to the traffic classifier for a content caching operation, so that the content server can initiate content caching request information to request to perform content caching. Therefore, a problem of caching, to the service node, diversified content requested by a content server is resolved, a response delay of related content is reduced, user experience is improved, and a problem of opening up a content caching service to a content provider is resolved.

A person skilled in the art should understand that illustrative logical blocks listed in the apparatuses that are provided in the embodiments of the present invention and that are shown in FIG. 2, FIG. 3, FIG. 4, and FIG. 5 may be implemented by electronic hardware, computer software, or a combination thereof. To clearly present interchangeability (interchangeability) between hardware and software, functions of the illustrative logical blocks are already generally described by using the illustrative components (illustrative components) and steps. Whether such functions are implemented by hardware or software depends on a particular application and a design requirement of an entire system. The person skilled in the art may implement the function of each particular application by using various methods, but it should not be considered that the implementation goes beyond the protection scope of the present invention. The illustrative logical blocks, modules, and circuits in the apparatuses that are provided in the embodiments of the present invention and that are shown in FIG. 2, FIG. 3, FIG. 4, and FIG. 5 may be implemented or may operate the described functions by using design of a general purpose processor, a digital signal processor, an application-specific integrated circuit (ASIC), a field programmable gate array (FPGA), or another programmable logical device, discrete gate or transistor logical device, discrete hardware component, or any combination thereof. The general purpose processor may be a microprocessor. Optionally, the general purpose processor may also be any conventional processor, controller, microcontroller, or state machine. The processor may also be implemented by using a combination of computing apparatuses, for example, a digital signal processor and a microprocessor, multiple microprocessors, one or more microprocessors combined with a digital signal processor core, or any other similar configuration.

Further, a system for content caching is provided in another embodiment of the present invention. The system includes the apparatus 200 shown in FIG. 2, the apparatus 300 shown in FIG. 3, the apparatus 400 shown in FIG. 4, and the apparatus 500 shown in FIG. 5, where the apparatus 200 may be a controller, the apparatus 300 may be a traffic classifier, the apparatus 400 may be a switch, and the apparatus 500 may be a content server. Functions of the apparatuses in the system in this embodiment of the present invention may be implemented by using the apparatus 200 shown in FIG. 2, the apparatus 300 shown in FIG. 3, the apparatus 400 shown in FIG. 4, and the apparatus 500 shown in FIG. 5.

FIG. 6 shows a schematic flowchart of a method for content caching according to an embodiment of the present invention. The schematic flowchart of the method for content caching may be executed by a controller, but the present invention is not limited thereto.

As shown in FIG. 6, the method for content caching provided in this embodiment of the present invention includes the following steps:
S601: A controller receives content caching request information sent by a content server.
S602: The controller acquires identifier information of a service node having a content caching function according to the content caching request information.

In step S601, the controller receives the content caching request information, and according to the content caching request information, the controller is triggered to acquire the identifier information of the service node having a content caching function.

S603: The controller constructs traffic forwarding policy information and traffic classification policy information according to the identifier information of the service node having a content caching function.

Step S603 specifically includes: constructing, by the controller, service chain forwarding table information that includes the identifier information of the service node having a content caching function; and constructing, by the controller, the traffic forwarding policy information that includes the service chain forwarding table information.

S604: The controller sends the traffic classification policy information to a traffic classifier, so that the traffic classifier sends a content packet to a switch according to the traffic classification policy information.

S605: The controller sends the traffic forwarding policy information to the switch, so that after receiving the content packet, the switch sends, according to the traffic forwarding policy information, the content packet to the service node having a content caching function to perform content caching.

Therefore, based on the apparatus for content caching provided in this embodiment of the present invention, the controller acquires content caching request information provided by a content server and identifier information of a service node having a content caching function, constructs a traffic forwarding policy and a traffic classification policy, sends the traffic forwarding policy to a switch, and sends the traffic classification policy to a traffic classifier, so that when a content packet is sent to the traffic classifier, the traffic classifier may send the content packet to the switch according to the traffic classification policy; and the switch may send, according to the traffic forwarding policy, the content packet to the service node having a content caching function to perform content caching. Therefore, a problem of performing content caching for diversified content is resolved, and further, a problem of how to open up a content caching service to a content provider is resolved, ensuring that the content provider performs content caching by using the content caching service.

In another embodiment of the present invention, the controller constructs service chain forwarding table information that includes the identifier information of the service node having a content caching function; in addition, the controller further generates content caching processing information according to a content caching request, where the service chain forwarding table information constructed by the controller further includes the content caching processing information. An objective of generating the content caching processing information by the controller is that when the service node having a content caching processing function further includes another function, for example, video optimization, when sending the content packet to the service node according to the service chain forwarding table information, the switch sends the content packet to the service node to perform content caching.

In step S601, the content caching request information acquired by the controller includes identifier information of the content server, or identifier information of the content server and a content identifier; and before the constructing, by the controller, the traffic classification policy information and the traffic forwarding policy information including the service chain forwarding table information, the method further includes: generating, by the controller, service traffic information according to the identifier information of the content server and the identifier information of the service node having a content caching function, where in this case, the traffic forwarding policy information constructed by the controller includes the service chain forwarding table and the service traffic information, or the service chain forwarding table information, the service traffic information, and the content identifier; and a traffic classification policy constructed by the controller includes the service traffic information, or the service traffic information and the content identifier.

In still another embodiment of the present invention, the controller constructs service chain forwarding table information that includes the identifier information of the service node having a content caching function; in addition, the controller further generates the service chain forwarding table identifier according to the service traffic information, or the service traffic chain information and the content identifier, where the traffic forwarding policy information constructed by the controller includes the service chain forwarding table information and the service chain forwarding table identifier; and the traffic classification policy information constructed by the controller includes the service chain forwarding table, the service traffic information, and the service chain forwarding table identifier, or the service traffic information, the content identifier, and the service chain forwarding table identifier.

Optionally, the controller sends the content caching request information to the service node having a content caching function, so that the service node constructs HTTP acquiring information according to the content caching request information, and requests to acquire the content packet from the content server.

In step S601, the receiving, by a controller, content caching request information sent by a content server includes: receiving, by the controller, the content caching request information directly sent by the content server; or receiving the content caching request information that is sent by the content server by using a service chain management system.

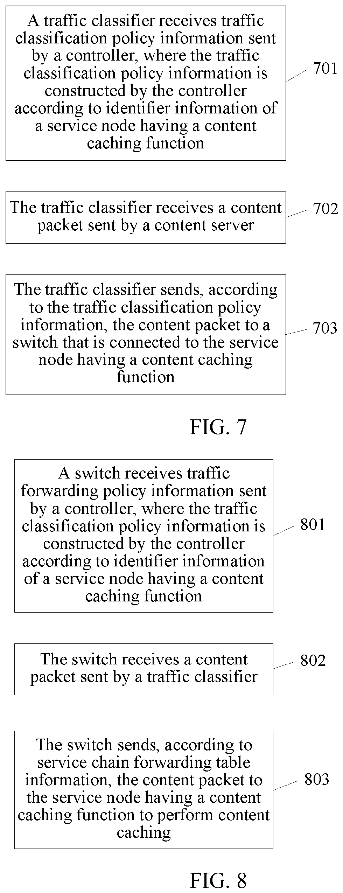

FIG. 7 shows a schematic flowchart of another method for content caching according to an embodiment of the present invention. The method provided in this embodiment of the present invention may be performed by a traffic classifier, but the present invention is not limited thereto. For the method provided in this embodiment of the present invention, refer to the method for content caching shown in FIG. 6, and vice versa.

As shown in FIG. 7, the another method for content caching provided in this embodiment of the present invention includes the following steps:
S701: A traffic classifier receives traffic classification policy information sent by a controller.

The traffic classification policy information is constructed by the controller according to identifier information of a service node having a content caching function.

S702: The traffic classifier receives a content packet sent by a content server.

S703: The traffic classifier sends, according to the traffic classification policy information, the content packet to a switch that is connected to the service node having a content caching function.

After step S703, the switch may send the user data packet to the service node having a content caching function according to traffic forwarding policy information that is constructed by the controller according to the identifier information of the service node having a content caching function.

In step S701, the traffic classification policy information received by the traffic classifier includes service traffic information and a service chain forwarding table identifier, or includes service traffic information, a content identifier, and a service chain forwarding table identifier; and step S703 specifically includes: acquiring, by the traffic classifier, the service chain forwarding table identifier in the traffic classification policy information; encapsulating, by the traffic classifier, the service chain forwarding table identifier into a packet header of the content packet; and sending, by the traffic classifier, the encapsulated content packet to the switch that is connected to the service node having a content caching function.

Further, before the acquiring, by the traffic classifier, the service chain forwarding table identifier in the traffic classification policy information, the method includes: acquiring, by the traffic classifier, the service traffic information in the content packet; and determining, by the traffic classifier, the traffic classification policy of the content packet according to the service traffic information; or acquiring, by the traffic classifier, the service traffic information and the content identifier that are in the content packet, and determining, by the traffic classifier, the traffic classification policy information of the content packet according to the service traffic information and the content identifier.

Therefore, based on the method for content caching provided in this embodiment of the present invention, a traffic classifier may send, according to traffic forwarding policy information that is sent by a controller and that is generated by the controller according to identifier information of a service node having a content caching function, a content packet to a switch that is connected to the service node having a content caching function, so that the content packet may be sent by the switch to the service node having a content caching function, ensuring that content caching processing can be performed for a content packet sent by a content server. Therefore, a problem of how to provide a content caching service to a content provider is resolved.

FIG. 8 shows a schematic flowchart of another method for content caching according to an embodiment of the present invention. The method provided in this embodiment of the present invention may be performed by a switch, but the present invention is not limited thereto. For the other method for content caching provided in this embodiment of the present invention, refer to the method embodiments shown in FIG. 6 and FIG. 7, and vice versa.

As shown in FIG. 8, the schematic flowchart of the another method for content caching provided in this embodiment of the present invention includes the following steps:
S801: A switch receives traffic forwarding policy information sent by a controller.

The traffic classification policy information is constructed by the controller according to identifier information of a service node having a content caching function.

S802: The switch receives a content packet sent by a traffic classifier.

The traffic classifier sends the content packet to the switch according to traffic classification policy information, where the traffic classification policy information is constructed by the controller according to the identifier information of the service node having a content caching function.

S803: The switch sends, according to the service chain forwarding table information, the content packet to the service node having a content caching function to perform content caching.

In another embodiment of the present invention, in the traffic forwarding policy information, the traffic forwarding policy information not only includes the service chain forwarding table information, but also includes a service chain forwarding table identifier. Before this, the traffic classifier encapsulates the service chain forwarding table identifier in the traffic classification policy information into the content packet, and sends the encapsulated content packet to the switch; and the switch determines the traffic forwarding policy according to the service chain forwarding table identifier.

In still another embodiment of the present invention, the traffic forwarding policy information not only includes the service chain forwarding table information, but also includes service traffic information or service traffic information and a content identifier; and the method further includes: acquiring, by the switch, the service traffic information in the content packet; and determining, by the switch, the traffic forwarding policy information of the content packet according to the service traffic information in the content packet; or acquiring, by the switch, the service traffic information and the content identifier that are in the content packet, and determining, by the switch, the traffic forwarding policy information of the content packet according to the service traffic information and the content identifier that are in the content packet.

Therefore, based on the method for content caching provided in this embodiment of the present invention, the switch receives traffic forwarding policy information that is sent by a controller and that is constructed according to identifier information of a service node having a content caching function, and sends, according to the traffic forwarding policy information, a content packet to the service node having a content caching function to perform content caching, which implements content caching for a content packet sent by a content server.

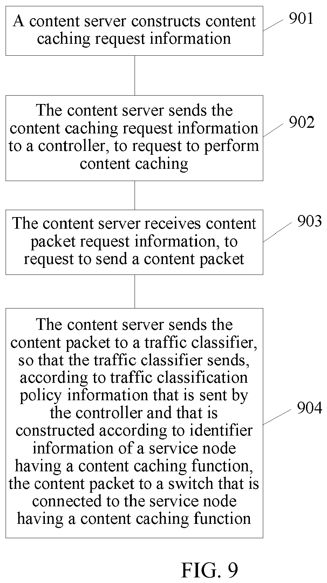

FIG. 9 shows a schematic flowchart of another method for content caching according to an embodiment of the present invention. The method provided in this embodiment of the present invention may be performed by a content server, but the present invention is not limited thereto. For the method provided in this embodiment of the present invention, refer to the methods shown in FIG. 6 and FIG. 7, and vice versa.

As shown in FIG. 9, the another method for content caching provided in this embodiment of the present invention includes the following steps:
S901: A content server constructs content caching request information.
S902: The content server sends the content caching request information to a controller to request to perform content caching.
S903: The content server receives content packet request information to request to send a content packet.
S904: The content server sends the content packet to a traffic classifier, so that the traffic classifier sends, according to traffic classification policy information that is sent by the controller and that is constructed according to identifier information of a service node having a content caching function, the content packet to a switch that is connected to the service node having a content caching function.

The content caching request information includes identifier information of the content server, and is used to request to perform content caching for all content packets on the content server; or the content caching request information includes identifier information of a content server and a content identifier, and is used to request to perform content caching for a specific content packet on the content server. That is, the content server may request content caching to be performed for diversified and different content.

In step S902, the sending, by the content server, the content caching request information to a controller specifically includes: directly sending, by the content server, the content caching request information to the controller; or sending, by the content server, the content caching request information to the controller by using a service chain management system.

In step S903, the receiving, by the content server, content packet request information specifically includes: receiving, by the content server, HTTP acquiring information that is constructed by the service node having a content caching function, where source Internet Protocol IP address information of the HTTP acquiring information is the identifier information of the service node having a content caching function, and destination IP address information of the HTTP acquiring information is address information of the apparatus, and is used to request the content packet from the content server; and the HTTP acquiring information is constructed by the service node having a content caching function, so that the service node sends the HTTP acquiring information to the content server to request the content server to send the content packet. In step S904, source IP address information of the content packet sent by the content server is the identifier information of the content server, and destination address information of the content packet is the identifier information of the service node having a content caching function.

Alternatively, in step S903, the receiving, by the content server, content packet request information specifically includes: receiving, by the content server, content caching response information sent by the controller or a service chain management system, where source IP address information of the content caching response information is the identifier information of the service node having a content caching function, and destination IP address information of the content caching response information is address information of the apparatus, and is used to request the content packet from the content server. In step S904, source IP address information of the content packet sent by the content server is the identifier information of the content server, and destination address information of the content packet is the identifier information of the service node having a content caching function.

Therefore, based on the method for content caching provided in this embodiment of the present invention, the content server sends content caching request information to a controller to request to perform content caching, and sends related content packet to a traffic classifier, for a content caching operation, so that a content server can initiate content caching request information to request diversified and different content to be cached. Therefore, a response delay of content is reduced, user experience is improved, and further, a problem of opening up a content caching service to a content provider is resolved.

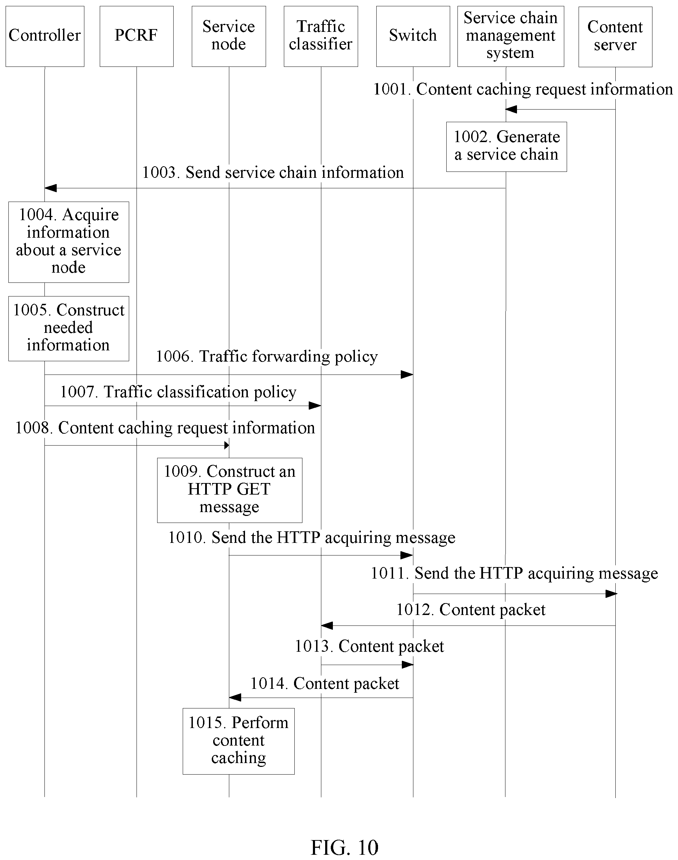

FIG. 10 shows a signaling interworking diagram of a method for content caching according to an embodiment of the present invention. This embodiment of the present invention is a specific embodiment of embodiments of the present invention that are shown in FIG. 6, FIG. 7, FIG. 8, and FIG. 9.

As shown in FIG. 10, the method for content caching provided in this embodiment of the present invention includes the following steps:
S1001: A content server sends content caching request information to a service chain management system.

The content caching request information includes identifier information of the content server, or identifier information of the content server and a content identifier.

When the content caching request information includes the identifier information of the content server, but does not include the content identifier, the content caching request information is used by the content server to request a content packet on the content server to be cached, where the identifier information of the content server includes an address, a fully qualified domain name, and port number information of the content server; or when the content caching request information includes address information of the content server and the content identifier, the content caching request information is used by the content server to request a specific content packet on the content server to be cached, where the content identifier may be a URL or a URI, and the content identifier may identify a specific content packet on the content server, where the content packet may be a video. That is, the content server may request content caching to be performed for different content packets.

Optionally, the content server may request content caching by using an application programming interface opened up by a mobile operator. For example, the content server may send the content caching request information by using an open-up platform, to send the content caching request information to the service chain management system, but the present invention is not limited thereto.

In actual network deployment, the service chain management system in this embodiment of the present invention is a logical network element, and may be implemented in a controller, or may be implemented in a network element with an open-up capability, or may be implemented by means of independent deployment, which is not limited in this embodiment of the present invention, and a name of the service chain management system name is not limited either.

S1002: The service chain management system generates a service chain according to the content caching request information, where the service chain includes the service chain information.

The service chain information includes content caching processing information, the content caching request information, or the like, where the content caching processing information is generated by the service chain management system according to the content caching request information.

S1003: The service chain management system sends the service chain information to a controller.

S1004: The controller acquires information, about a service node having a content caching function, in a network.

The controller learns, according to the service chain information, that content caching service chain processing needs to be performed, and accordingly, acquires the information about the service node having a content caching function.

The information about the service node includes identifier information of the service node, and a port number; and the identifier information of the service node includes address information of the service node.

S1005: The controller constructs information that is needed by traffic forwarding policy information and traffic classification policy information.

The controller constructs the traffic forwarding policy information and the traffic classification policy information according to the identifier information of the service node having a content caching function.

Specifically, the controller constructs service chain forwarding table information according to the identifier information of the service node having a content caching function, where the service chain forwarding table information includes the identifier information of the content caching node, or includes the identifier information of the content caching node and the content caching processing information. The controller generates service traffic information according to the address information and the port number of the content caching node, and address information, a port number, and a protocol type of the content server. The controller generates a service chain forwarding table identifier according to the service traffic information, or generates a service chain forwarding table identifier according to the service traffic information and the content identifier, where the service chain forwarding table identifier is used to identify the service chain forwarding table.

S1006: The controller sends the traffic forwarding policy information to a switch.

The controller constructs the traffic forwarding policy information.

The traffic forwarding policy information includes the service traffic information and the service chain forwarding table information, or includes the service traffic information, the service chain forwarding table information, and the content identifier, or includes the service chain forwarding table information and the service chain forwarding table identifier, and a name of the traffic forwarding policy information is not limited in this embodiment of the present invention.

S1007: The controller sends the traffic classification policy information to a traffic classifier.

The controller constructs the traffic classification policy information according to the service chain control information.

The traffic classification policy information includes the service traffic information, or includes the service traffic information and the content identifier. Optionally, the traffic classification policy information may also include the service chain forwarding table identifier.

Optionally, S1007 may include two cases: the controller may directly send the traffic classification policy information to the traffic classifier; or the controller sends the traffic classification policy information to a PCRF, and the PCRF sends the traffic classification policy information to the traffic classifier.

S1008: The controller sends content caching request information to the service node having a content caching function.

S1009: The service node having a content caching function constructs HTTP acquiring information.

The HTTP acquiring information includes the content identifier. Source IP address information of the HTTP acquiring information is the identifier information of the service node having a content caching function, and a destination IP address of the HTTP acquiring information is the identifier information of the content server. The HTTP acquiring information is used for the service node having a content caching function to acquire a content packet corresponding to the content identifier.

S1010: The service node having a content caching function sends the HTTP acquiring information to the switch.

S1011: The switch sends the HTTP acquiring information to the content server.

S1012: The content server sends, according to a content identifier in the HTTP acquiring information, the content packet corresponding to the content identifier to the traffic classifier.

S1013: The traffic classifier sends the content packet to the switch according to the traffic classification policy.

If the traffic classification policy includes the service chain forwarding table identifier, the traffic classifier acquires the service chain forwarding table identifier, encapsulates the service chain forwarding table identifier to a packet header of the content data packet, and sends the encapsulated content packet to the switch.

A specific process of acquiring the service chain forwarding table identifier by the traffic classifier is as follows:
a. That the traffic classifier acquires service traffic information in the content packet, and acquires the service chain forwarding table identifier according to the service traffic information specifically includes: determining, by the traffic classifier, a traffic classification policy of the content packet according to whether the service traffic information in the received content packet is consistent with the service traffic information in the received traffic classification policy information, so as to acquire a service chain forwarding table identifier in the traffic classification policy.
b. That the traffic classifier acquires service traffic information and a content identifier that are in the content packet, and acquires the service chain forwarding table identifier according to the service traffic information specifically includes: determining, by the traffic classifier, a traffic classification policy of the content packet according to whether the service traffic information and the content identifier that are in the received content packet are consistent with the service traffic information and the content identifier that are in the received traffic classification policy information, so as to acquire a service chain forwarding table identifier in the traffic classification policy.

S1014: The switch sends the content packet to the service node having a content caching function.

The switch receives the content packet, and if the service chain forwarding table identifier is encapsulated in the content packet, the switch determines the traffic forwarding policy according to the service chain forwarding table identifier, and sends the content packet to the corresponding service node having a content caching function according to the service chain forwarding table information in the traffic forwarding policy.
a. If the service chain forwarding table identifier does not exist in the content packet, the switch parses the content packet, and acquires the service traffic information in the content packet. The switch determines traffic forwarding policy information of the content packet according to the service traffic information, and sends the content packet to the corresponding service node having a content caching function according to service chain forwarding table information in the traffic forwarding policy.
b. If the service chain forwarding table identifier does not exist in the content packet, the switch parses the content packet, and acquires the service traffic information and the content identifier that are in the content packet. The switch determines a traffic forwarding policy of the content packet according to the service traffic information and the content identifier that are in the content packet, and sends the content packet to the corresponding service node having a content caching function according to service chain forwarding table information in the traffic forwarding policy.

S1015: The service node having a content caching function receives the content packet, and performs content caching for the content packet.

The service node having a content caching function determines, according to a quintet of the content packet or a quintet and the content identifier, that the content packet is a content packet for which the content caching needs to be performed, and performs content caching for the content packet.

Therefore, based on the method for content caching provided in this embodiment of the present invention, a content server sends content caching request information to a controller by using a service chain management system; the controller acquires identifier information of a service node having a content caching function, constructs traffic forwarding policy information and traffic classification policy information according to the information of the service node having a content caching function, and sends the traffic classification policy information to a traffic classifier, so that after receiving a content packet, the traffic classifier sends the content packet to a switch according to the traffic classification policy information; the controller sends the traffic forwarding policy information to the switch, so that the switch sends the content packet to the service node having a content caching function according to the traffic forwarding policy information. A problem of opening up a content caching service to a content provider is resolved, and it is ensured that the content provider can initiate a content caching request to request to perform content caching.

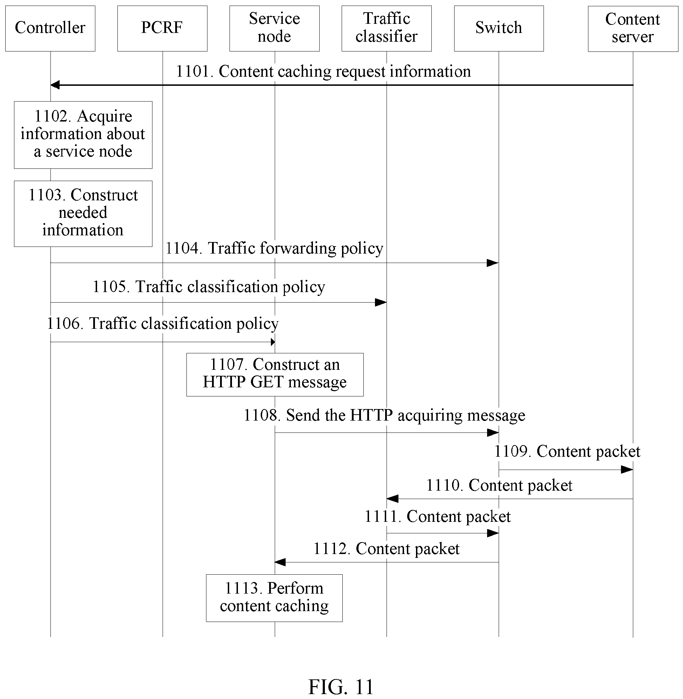

FIG. 11 shows a signaling interworking diagram of another method for content caching according to an embodiment of the present invention. This embodiment of the present invention is a specific embodiment of the embodiments of the present invention that are shown in FIG. 6, FIG. 7, FIG. 8, and FIG. 9.

As shown in FIG. 11, the another method for content caching provided in this embodiment of the present invention includes the following steps:
S1101: A content server sends content caching request information to a controller.

This is the difference between this embodiment of the present invention and the embodiment, shown in FIG. 10, of the present invention. For the content caching request information, refer to specific content of the content caching request information shown in FIG. 10.

S1102: The controller acquires information, about a service node having a content caching function, in a network.

For this step, refer to step S1004 in FIG. 10.

S1103: The controller constructs information that is needed by traffic forwarding policy information and traffic classification policy information.

The controller generates content caching processing information according to the content caching request information. For other content of this step, refer to step S1005.

For step S1104 to step S1113, refer to step S1006 to step S1015 in the method shown in FIG. 10.

Therefore, based on the method for content caching provided in this embodiment of the present invention, a content server sends content caching request information to a controller; the controller acquires identifier information of a service node having a content caching function, constructs traffic forwarding policy information and traffic classification policy information according to the identifier information of the service node having a content caching function, and sends the traffic classification policy information to a traffic classifier, so that after receiving a content packet, the traffic classifier sends the content packet to a switch according to the traffic classification policy information; the controller sends the traffic forwarding policy information to the switch, so that the switch sends the content packet to the service node having a content caching function according to the traffic forwarding policy information. A problem of opening up a content caching service to a content provider is resolved, and it is ensured that the content provider can initiate a content caching request to request to perform content caching.

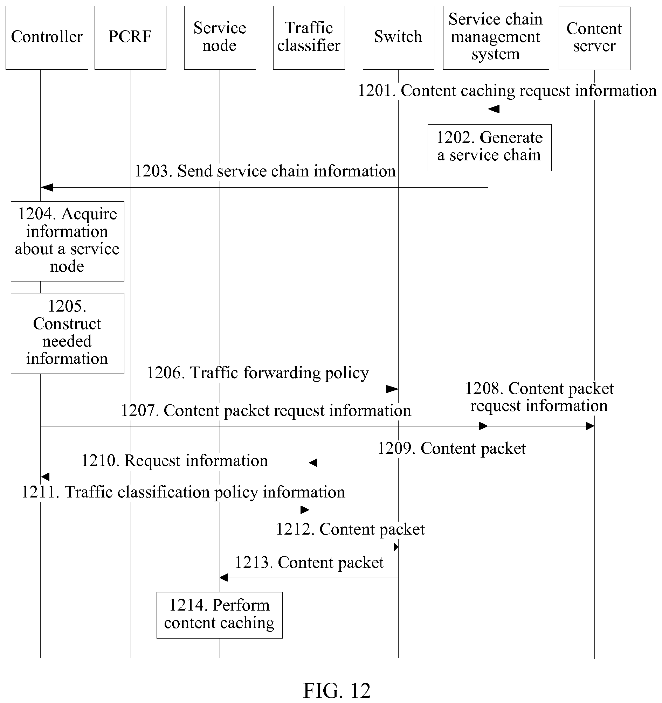

FIG. 12 shows a signaling interworking diagram of another method for content caching according to an embodiment of the present invention. This embodiment of the present invention is a specific embodiment of the embodiments of the present invention that are shown in FIG. 6, FIG. 7, FIG. 8, and FIG. 9.

As shown in FIG. 12, the another method for content caching provided in this embodiment of the present invention includes the following steps:
For step S1201 to step S1206, refer to step S1001 to step S1006 in the embodiment, shown in FIG. 10, of the present invention.

S1207: The controller sends content packet request information to the service chain management system.

The content packet request information is response information of service chain information, and the response information includes identifier information of the service node having a content caching function and the content caching request information, for requesting a content packet.

S1208: The service chain management system sends the content packet request information to the content server.

S1209: The content server sends a content packet to a traffic classifier.

The content server sends the content packet corresponding to the content caching request information to the traffic classifier. When the content caching request information includes identifier information of the content server, the content server sends all content packets on the content server to the traffic classifier; or when the content caching request information further includes a content identifier, the content server sends a specific content packet corresponding to the content identifier to the traffic classifier.

Source IP address information of the content packet is the identifier information of the content server, and destination address information of the content packet is the identifier information of the service node having a content caching function. When the sent content packet is a specific content packet, the content packet includes the content identifier.

S1210: The traffic classifier sends request information to the controller, to request the controller to send the corresponding traffic classification policy information to the traffic classifier.

The traffic classifier acquires service traffic information of the content packet or service traffic information and the content identifier. If the corresponding traffic classification policy information exists in the traffic classifier, go to step S1202.

If the corresponding traffic classification policy information does not exist in the traffic classifier, the traffic classifier sends the request information to the controller, where the request information includes the service traffic information of the content packet or the service traffic information and the content identifier, and requests to send the corresponding traffic classification policy information to the traffic classifier.

S1211: The controller sends the traffic classification policy information to the traffic classifier.

The traffic classification policy information includes service traffic information and service chain forwarding table information, or includes service traffic information, service chain forwarding table information, and a content identifier. Optionally, the traffic classification policy information may also include the service chain forwarding table identifier.

For step S1212 to step S1214, refer to step S1013 to step S1015 in the method for content caching provided in FIG. 10.

Therefore, based on the method for content caching provided in this embodiment of the present invention, a traffic classifier sends request information that includes service traffic information or service traffic information and a content identifier to a controller, to request the controller to send traffic classification policy information, so that a content packet is sent to a switch according to the traffic classification policy information; and the switch sends the content packet to a service node having a content caching function according to traffic forwarding policy information. A problem of opening up a content caching service to a content provider is resolved, and it is ensured that content caching processing is performed for a content packet for which a content server requests to perform content caching.

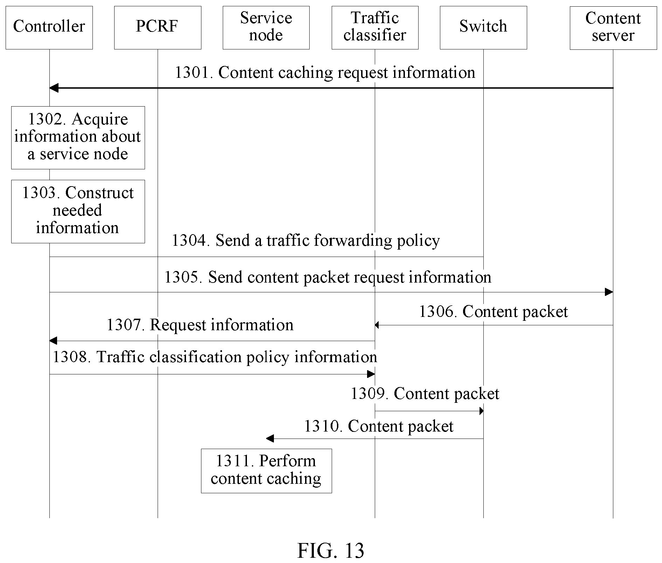

FIG. 13 shows a signaling interworking diagram of another method for content caching according to an embodiment of the present invention. This embodiment of the present invention is a specific embodiment of the embodiments of the present invention that are shown in FIG. 6, FIG. 7, FIG. 8, and FIG. 9.

As shown in FIG. 13, the another method for content caching provided in this embodiment of the present invention includes the following steps:
For step S1301 to step S1303, refer to step S1101 to step S1103 in the method embodiment shown in FIG. 11.

S1304: A controller sends traffic forwarding policy information to a switch.

S1305: The controller sends content packet request information to a content server.

The content packet request information is response information of content caching request information, and the response information includes identifier information of a service node having a content caching function and the content caching request information, for requesting a content packet.

For step S1306 to step S1311, refer to step S1209 to step S1214 in the method embodiment shown in FIG. 12.

Therefore, based on the method for content caching provided in this embodiment of the present invention, a controller receives content caching request information sent by a content server, constructs traffic forwarding policy information and traffic classification policy information, and sends the traffic classification policy information to a traffic classifier, so that after receiving a content packet, the traffic classifier sends the content packet to a switch according to the traffic classification policy information; and the controller sends the traffic forwarding policy information to the switch, so that the switch sends the content packet to the service node having a content caching function according to the traffic forwarding policy information. A problem of opening up a content caching service to a content provider is resolved, and it is ensured that the content provider can initiate a content caching request to request to perform content caching.

A person of ordinary skill in the art may be aware that, in combination with the examples described in the embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Apart or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (Read-Only Memory, ROM for short), a random access memory (Random Access Memory, RAM for short), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. An apparatus (200) for content caching, comprising:
an acquiring module (201), configured to acquire content caching request information sent by a content server, and acquire identifier information of a service node having a content caching function according to the content caching request information;
a processing module (202), configured to construct traffic forwarding policy information and traffic classification policy information according to the identifier information of the service node having a content caching function, wherein that the processing module (202) is configured to construct traffic forwarding policy information according to the identifier information of the service node having a content caching function comprises: the processing module (202) is configured to construct service chain forwarding table information that comprises the identifier information of the service node having a content caching function, wherein the service chain forwarding table information is used to indicate, after a switch receives a content packet, a next destination of the content packet to the switch and the processing module (202) is configured to construct the traffic forwarding policy information, wherein the traffic forwarding policy information comprises the service chain forwarding table information, and the processing module (202) is further configured to generate content caching processing information according to the content caching request information, wherein the service chain forwarding table information constructed by the processing module further comprises the content caching processing information; and
a sending module (203), configured to send the traffic classification policy information to a traffic classifier, triggering the traffic classifier to send a content packet corresponding to the content caching request information to the switch according to the traffic classification policy information; and send the traffic forwarding policy information to the switch, triggering, after receiving the content packet, the switch to send, according to the traffic forwarding policy information, the content packet to the service node having a content caching function to perform content caching.

2. The apparatus (200) according to claim 1, wherein:
the content caching request information acquired by the acquiring module (201) comprises identifier information of the content server, or identifier information of the content server and a content identifier;
the processing module (202) is further configured to generate service traffic information according to the identifier information of the content server and address information of the service node having a content caching function; wherein
the traffic forwarding policy information constructed by the processing module (202) comprises the service chain forwarding table and the service traffic information, or the service chain forwarding table information, the service traffic information, and the content identifier; and
a traffic classification policy constructed by the processing module (202) comprises the service traffic information, or the service traffic information and the content identifier.

3. The apparatus (200) according to claim 2, wherein the processing module (202) is further configured to generate the service chain forwarding table identifier according to the service traffic information or the service traffic information and the content identifier;
the traffic forwarding policy information constructed by the processing module (202) comprises the service chain forwarding table information and the service chain forwarding table identifier; and
the traffic classification policy information constructed by the processing module (202) comprises the service traffic information and the service chain forwarding table identifier, or the service traffic information, the content identifier, and the service chain forwarding table identifier.

4. The apparatus (200) according to claim 1, wherein the sending module (203) is further configured to send the content caching request information to the service node having a content caching function, so that the service node constructs Hypertext Transfer Protocol HTTP acquiring information according to the content caching request information, and requests to acquire the content packet from the content server.

5. The apparatus (200) according to claim 1, wherein that the acquiring module (201) is configured to acquire content caching request information sent by a content server specifically comprises:
the acquiring module (201) is specifically configured to acquire the content caching request information directly sent by the content server; or
acquire service chain information that is sent by the content server by using a service chain management system, wherein the service chain information comprises the content caching request information.

6. A method for content caching, comprising:
receiving, by a controller, content caching request information sent by a content server;
acquiring, by the controller according to the content caching request information, identifier information of a service node having a content caching function;
generating, by the controller, content caching processing information according to the content caching request information;
constructing, by the controller, traffic forwarding policy information and traffic classification policy information according to the identifier information of the service node having a content caching function, wherein the constructing, by the controller, traffic forwarding policy information according to the identifier information of the service node having a content caching function comprises: constructing, by the controller, service chain forwarding table information that comprises the identifier information of the service node having a content caching function, wherein the service chain forwarding table information is used to indicate, after a switch receives a content packet, a next destination of the content packet to the switch and constructing, by the controller, the traffic forwarding policy information, wherein the traffic forwarding policy information comprises the service chain forwarding table information, and wherein the service chain forwarding table information constructed by the controller further comprises the content caching processing information;
sending, by the controller, the traffic classification policy information to a traffic classifier, triggering the traffic classifier to send a content packet corresponding to the content caching request information to the switch according to the traffic classification policy information; and
sending, by the controller, the traffic forwarding policy information to the switch, triggering after receiving the content packet, the switch to send according to the traffic forwarding policy information, the content packet to the service node having a content caching function to perform content caching.

7. The method according to claim 6, wherein the content caching request information comprises identifier information of the content server, or identifier information of the content server and a content identifier; and
before the constructing, by the controller, the traffic classification policy information and the traffic forwarding policy information that comprises the service chain forwarding table information, the method further comprises:
generating, by the controller, service traffic information according to the identifier information of the content server and address information of the service node having a content caching function, wherein
the traffic forwarding policy information constructed by the controller comprises the service chain forwarding table and the service traffic information, or the service chain forwarding table information, the service traffic information, and the content identifier; and
a traffic classification policy constructed by the controller comprises the service traffic information, or the service traffic information and the content identifier.

8. The method according to claim 7, wherein the method further comprises:
generating, by the controller, the service chain forwarding table identifier according to the service traffic information, or the service traffic chain information and the content identifier, wherein
the traffic forwarding policy information constructed by the controller comprises the service chain forwarding table information and the service chain forwarding table identifier; and
the traffic classification policy information constructed by the controller comprises the service traffic information and the service chain forwarding table identifier, or the service traffic information, the content identifier, and the service chain forwarding table identifier.

9. The method according to claim 6, wherein the method further comprises:
sending, by the controller, the content caching request information to the service node having a content caching function, so that the service node constructs Hypertext Transfer Protocol HTTP acquiring information according to the content caching request information, and requests to acquire the content packet from the content server.

10. The method according to claim 6, wherein the receiving, by a controller, content caching request information sent by a content server comprises:
receiving, by the controller, the content caching request information directly sent by the content server; or
receiving the content caching request information that is sent by the content server by using a service chain management system.

11. A method for content caching, wherein the method comprises:
receiving, by a traffic classifier, traffic classification policy information sent by a controller, wherein
the traffic classification policy information is constructed by the controller according to identifier information of a service node having a content caching function;
receiving, by the traffic classifier, a content packet sent by a content server; and
sending, by the traffic classifier according to the traffic classification policy information, the content packet to a switch that is connected to the service node having a content caching function triggering the switch to send, according to a traffic forwarding policy information, the content packet to the service node having a content caching function to perform content caching, wherein the traffic forwarding policy information is constructed by the controller and sent by the controller to the switch, and wherein the traffic forwarding policy information comprises a service chain forwarding table information, constructed by the controller, that comprises the identifier information of the service node having a content caching function, wherein the service chain forwarding table information is used to indicate, after the switch receives a content packet, a next destination of the content packet to the switch, and the service chain forwarding table information further comprises content caching processing information, generated by the controller, according to the content caching request information.

12. The method according to claim 11, wherein the traffic classification policy information received by the traffic classifier comprises service traffic information and a service chain forwarding table identifier, or comprises service traffic information, a content identifier, and a service chain forwarding table identifier; and
the sending, by the traffic classifier according to the traffic classification policy information, the content packet to a switch that is connected to the service node having a content caching function comprises:
acquiring, by the traffic classifier, the service chain forwarding table identifier in the traffic classification policy information;
encapsulating, by the traffic classifier, the service chain forwarding table identifier into a packet header of the content packet; and
sending, by the traffic classifier, the encapsulated content packet to the switch that is connected to the service node having a content caching function.

13. The method according to claim 12, before the acquiring, by the traffic classifier, the service chain forwarding table identifier in the traffic classification policy information, comprising:
acquiring, by the traffic classifier, the service traffic information in the content packet; and
determining, by the traffic classifier, the traffic classification policy of the content packet according to the service traffic information; or
acquiring, by the traffic classifier, the service traffic information and the content identifier that are in the content packet, and
determining, by the traffic classifier, the traffic classification policy information of the content packet according to the service traffic information and the content identifier.

## Patentansprüche

1. Vorrichtung (200) zur Inhaltszwischenspeicherung, umfassend:
ein Beschaffungsmodul (201), ausgelegt zum Beschaffen von durch einen Inhaltsserver gesendeten Inhaltszwischenspeicherungs-Anforderungsinformationen und Beschaffen von Kennungsinformationen eines Dienstknotens, der eine Inhaltszwischenspeicherungsfunktion aufweist, gemäß den Inhaltszwischenspeicherungs-Anforderungsinformationen;
ein Verarbeitungsmodul (202), ausgelegt zum Konstruieren von Verkehrsweiterleitungs-Richtlinieninformationen und Verkehrsklassifikations-Richtlinieninformationen gemäß den Kennungsinformationen des Dienstknotens, der eine Inhaltszwischenspeicherungsfunktion aufweist, wobei, dass das Verarbeitungsmodul (202) ausgelegt ist zum Konstruieren von Verkehrsweiterleitungs-Richtlinieninformationen gemäß den Kennungsinformationen des Dienstknotens, der eine Inhaltszwischenspeicherungsfunktion aufweist, Folgendes umfasst: das Verarbeitungsmodul (202) ist ausgelegt zum Konstruieren von Dienstketten-Weiterleitungstabelleninformationen, die die Kennungsinformationen des Dienstknotens, der eine Inhaltszwischenspeicherungsfunktion aufweist, umfasst, wobei die Dienstketten-Weiterleitungstabelleninformationen verwendet werden, um, nachdem ein Switch ein Inhaltspaket empfängt, dem Switch ein nächstes Ziel des Inhaltspakets anzugeben, und das Verarbeitungsmodul (202) ausgelegt ist zum Konstruieren der Verkehrsweiterleitungs-Richtlinieninformationen, wobei die Verkehrsweiterleitungs-Richtlinieninformationen die Dienstketten-Weiterleitungstabelleninformationen umfassen und das Verarbeitungsmodul (202) ferner ausgelegt ist zum Erzeugen von Inhaltszwischenspeicherungs-Verarbeitungsinformationen gemäß den Inhaltszwischenspeicherungs-Anforderungsinformationen, wobei die durch das Verarbeitungsmodul konstruierten Dienstketten-Weiterleitungstabelleninformationen ferner die Inhaltszwischenspeicherungs-Verarbeitungsinformationen umfassen; und
ein Sendemodul (203), ausgelegt zum Senden der Verkehrsklassifikations-Richtlinieninformationen zu einem Verkehrsklassifizierer, wodurch der Verkehrsklassifizierer dazu getriggert wird, ein den Inhaltszwischenspeicherungs-Anforderungsinformationen entsprechendes Inhaltspaket gemäß den Verkehrsklassifikations-Richtlinieninformationen zu dem Switch zu senden; und Senden der Verkehrsweiterleitungs-Richtlinieninformationen zu dem Switch, wodurch der Switch nach dem Empfangen des Inhaltspakets dazu getriggert wird, das Inhaltspaket gemäß den Verkehrsweiterleitungs-Richtlinieninformationen zu dem Dienstknoten zu senden, der eine Inhaltszwischenspeicherungsfunktion aufweist, um Inhaltszwischenspeicherung durchzuführen.

2. Vorrichtung (200) nach Anspruch 1, wobei
die durch das Beschaffungsmodul (201) beschafften Inhaltszwischenspeicherungs-Anforderungsinformationen Kennungsinformationen des Inhaltsservers oder Kennungsinformationen des Inhaltsservers und eine Inhaltskennung umfassen;
das Verarbeitungsmodul (202) ferner ausgelegt ist zum Erzeugen von Dienstverkehrsinformationen gemäß den Kennungsinformationen des Inhaltsservers und Adresseninformationen des Dienstknotens, der eine Inhaltszwischenspeicherungsfunktion aufweist; wobei
die durch das Verarbeitungsmodul (202) konstruierten Verkehrsweiterleitungs-Richtlinieninformationen die Dienstketten-Weiterleitungstabellen- und die Dienstverkehrsinformationen oder die Dienstketten-Weiterleitungstabelleninformationen, die Dienstverkehrsinformationen und die Inhaltskennung umfassen; und
eine durch das Verarbeitungsmodul (202) konstruierte Verkehrsklassifikationsrichtlinie die Dienstverkehrsinformationen oder die Dienstverkehrsinformationen und die Inhaltskennung umfasst.

3. Vorrichtung (200) nach Anspruch 2, wobei das Verarbeitungsmodul (202) ferner ausgelegt ist zum Erzeugen der Dienstketten-Weiterleitungstabellenkennung gemäß den Dienstverkehrsinformationen oder den Dienstverkehrsinformationen und der Inhaltskennung;
die durch das Verarbeitungsmodul (202) konstruierten Verkehrsweiterleitungs-Richtlinieninformationen die Dienstketten-Weiterleitungstabelleninformationen und die Dienstketten-Weiterleitungstabellenkennung umfassen; und
die durch das Verarbeitungsmodul (202) konstruierten Verkehrsklassifikations-Richtlinieninformationen die Dienstverkehrsinformationen und die Dienstketten-Weiterleitungstabellenkennung oder die Dienstverkehrsinformationen, die Inhaltskennung und die Dienstketten-Weiterleitungstabellenkennung umfassen.

4. Vorrichtung (200) nach Anspruch 1, wobei das Sendemodul (203) ferner ausgelegt ist zum Senden der Inhaltszwischenspeicherungs-Anforderungsinformationen zu dem Dienstknoten, der eine Inhaltszwischenspeicherungsfunktion aufweist, so dass der Dienstknoten Beschaffungsinformationen des "Hypertext Transfer Protocol" HTTP gemäß den Inhaltszwischenspeicherungs-Anforderungsinformationen konstruiert und anfordert, das Inhaltspaket von dem Inhaltsserver zu beschaffen.

5. Vorrichtung (200) nach Anspruch 1, wobei dass das Beschaffungsmodul (201) ausgelegt ist zum Beschaffen von durch einen Inhaltsserver gesendeten Inhaltszwischenspeicherungs-Anforderungsinformationen speziell Folgendes umfasst:
das Beschaffungsmodul (201) ist speziell ausgelegt zum Beschaffen der direkt durch den Inhaltsserver gesendeten Inhaltszwischenspeicherungs-Anforderungsinformationen; oder
Beschaffen von Dienstketteninformationen, die durch den Inhaltsserver gesendet werden, indem ein Dienstketten-Verwaltungssystem verwendet wird, wobei die Dienstketteninformationen die Inhaltszwischenspeicherungs-Anforderungsinformationen umfassen.

6. Verfahren zur Inhaltszwischenspeicherung, umfassend:
Empfangen von durch einen Inhaltsserver gesendeten Inhaltszwischenspeicherungs-Anforderungsinformationen durch eine Steuerung;
Beschaffen von Kennungsinformationen eines Dienstknotens, der eine Inhaltszwischenspeicherungsfunktion aufweist, durch die Steuerung gemäß den Inhaltszwischenspeicherungs-Anforderungsinformationen;
Erzeugen von Inhaltszwischenspeicherungs-Verarbeitungsinformationen durch die Steuerung gemäß den Inhaltszwischenspeicherungs-Anforderungsinformationen;
Konstruieren von Verkehrsweiterleitungs-Richtlinieninformationen und Verkehrsklassifikations-Richtlinieninformationen durch die Steuerung gemäß den Kennungsinformationen des Dienstknotens, der eine Inhaltszwischenspeicherungsfunktion aufweist, wobei das Konstruieren von Verkehrsweiterleitungs-Richtlinieninformationen durch die Steuerung gemäß den Kennungsinformationen des Dienstknotens, der eine Inhaltszwischenspeicherungsfunktion aufweist, Folgendes umfasst: Konstruieren von Dienstketten-Weiterleitungstabelleninformationen, die die Kennungsinformationen des Dienstknotens, der eine Inhaltszwischenspeicherungsfunktion aufweist, umfassen, durch die Steuerung, wobei die Dienstketten-Weiterleitungstabelleninformationen verwendet werden, um, nachdem ein Switch ein Inhaltspaket empfängt, dem Switch ein nächstes Ziel des Inhaltspakets anzugeben, und Konstruieren der Verkehrsweiterleitungs-Richtlinieninformationen durch die Steuerung, wobei die Verkehrsweiterleitungs-Richtlinieninformationen die Dienstketten-Weiterleitungstabelleninformationen umfassen und wobei die durch die Steuerung konstruierten Dienstketten-Weiterleitungstabelleninformationen ferner die Inhaltszwischenspeicherungs-Verarbeitungsinformationen umfassen;
Senden der Verkehrsklassifikations-Richtlinieninformationen zu einem Verkehrsklassifizierer durch die Steuerung, wodurch der Verkehrsklassifizierer dazu getriggert wird, gemäß den Verkehrsklassifikations-Richtlinieninformationen ein den Inhaltszwischenspeicherungs-Anforderungsinformationen entsprechendes Inhaltspaket zu dem Switch zu senden; und
Senden der Verkehrsweiterleitungs-Richtlinieninformationen zu dem Switch durch die Steuerung, wodurch nach Empfang des Inhaltspakets der Switch dazu getriggert wird, gemäß den Verkehrsweiterleitungs-Richtlinieninformationen das Inhaltspaket zu dem Dienstknoten zu senden, der eine Inhaltszwischenspeicherungsfunktion aufweist, um Inhaltszwischenspeicherung durchzuführen.

7. Verfahren nach Anspruch 6, wobei die Inhaltszwischenspeicherungs-Anforderungsinformationen Kennungsinformationen des Inhaltsservers oder Kennungsinformationen des Inhaltsservers und eine Inhaltskennung umfassen; und das Verfahren vor dem Konstruieren der Verkehrsklassifikations-Richtlinieninformationen und der Verkehrsweiterleitungs-Richtlinieninformationen, die die Dienstketten-Weiterleitungstabelleninformationen umfassen, durch die Steuerung, ferner Folgendes umfasst:
Erzeugen von Dienstverkehrsinformationen durch die Steuerung gemäß den Kennungsinformationen des Inhaltsservers und Adresseninformationen des Dienstknotens, der eine Inhaltszwischenspeicherungsfunktion aufweist, wobei die durch die Steuerung konstruierten Verkehrsweiterleitungs-Richtlinieninformationen die Dienstketten-Weiterleitungstabellen- und die Dienstverkehrsinformationen oder die Dienstketten-Weiterleitungstabelleninformationen, die Dienstverkehrsinformationen und die Inhaltskennung umfassen; und
eine durch die Steuerung konstruierte Verkehrsklassifikationsrichtlinie die Dienstverkehrsinformationen oder die Dienstverkehrsinformationen und die Inhaltskennung umfasst.

8. Verfahren nach Anspruch 7, wobei das Verfahren ferner Folgendes umfasst:
Erzeugen der Dienstketten-Weiterleitungstabellenkennung durch die Steuerung gemäß den Dienstverkehrsinformationen oder den Dienstverkehrsketteninformationen und der Inhaltskennung, wobei
die durch die Steuerung konstruierten Verkehrsweiterleitungs-Richtlinieninformationen die Dienstketten-Weiterleitungstabelleninformationen und die Dienstketten-Weiterleitungstabellenkennung umfassen; und
die durch die Steuerung konstruierten Verkehrsklassifikations-Richtlinieninformationen die Dienstverkehrsinformationen und die Dienstketten-Weiterleitungstabellenkennung oder die Dienstverkehrsinformationen, die Inhaltskennung und die Dienstketten-Weiterleitungstabellenkennung umfassen.

9. Verfahren nach Anspruch 6, wobei das Verfahren ferner Folgendes umfasst:
Senden der Inhaltszwischenspeicherungs-Anforderungsinformationen zu dem Dienstknoten, der eine Inhaltszwischenspeicherungsfunktion aufweist, durch die Steuerung, so dass der Dienstknoten Beschaffungsinformationen des "Hypertext Transfer Protocol" HTTP gemäß den Inhaltszwischenspeicherungs-Anforderungsinformationen konstruiert und anfordert, das Inhaltspaket von dem Inhaltsserver zu beschaffen.

10. Verfahren nach Anspruch 6, wobei das Empfangen von durch einen Inhaltsserver gesendeten Inhaltszwischenspeicherungs-Anforderungsinformationen durch eine Steuerung Folgendes umfasst:
Empfangen der direkt durch den Inhaltsserver gesendeten Inhaltszwischenspeicherungs-Anforderungsinformationen durch die Steuerung; oder Empfangen der Inhaltszwischenspeicherungs-Anforderungsinformationen, die durch den Inhaltsserver gesendet werden, durch Verwendung eines Dienstketten-Verwaltungssystems.

11. Verfahren zur Inhaltszwischenspeicherung, wobei das Verfahren Folgendes umfasst:
Empfangen von durch eine Steuerung gesendeten Verkehrsklassifikations-Richtlinieninformationen durch einen Verkehrsklassifizierer, wobei die Verkehrsklassifikations-Richtlinieninformationen durch die Steuerung gemäß Kennungsinformationen eines Dienstknotens, der eine Inhaltszwischenspeicherungsfunktion aufweist, konstruiert werden;
Empfangen eines durch einen Inhaltsserver gesendeten Inhaltspakets durch den Verkehrsklassifizierer; und
Senden des Inhaltspakets zu einem Switch, der mit dem Dienstknoten verbunden ist, der eine Inhaltszwischenspeicherungsfunktion aufweist, durch den Verkehrsklassifizierer gemäß den Verkehrsklassifikations-Richtlinieninformationen, wodurch der Switch dazu getriggert wird, gemäß einer Verkehrsweiterleitungs-Richtlinieninformation das Inhaltspaket zu dem Dienstknoten zu senden, der eine Inhaltszwischenspeicherungsfunktion aufweist, um Inhaltszwischenspeicherung durchzuführen, wobei die Verkehrsweiterleitungs-Richtlinieninformationen durch die Steuerung konstruiert und durch die Steuerung zu dem Switch gesendet werden und wobei die Verkehrsweiterleitungs-Richtlinieninformationen eine durch die Steuerung konstruierte Dienstketten-Weiterleitungstabelleninformation umfassen, die die Kennungsinformationen des Dienstknotens, der eine Inhaltszwischenspeicherungsfunktion aufweist, umfasst, wobei die Dienstketten-Weiterleitungstabelleninformation verwendet wird, um, nachdem der Switch ein Inhaltspaket empfängt, dem Switch ein nächstes Ziel des Inhaltspakets anzugeben, und die Dienstketten-Weiterleitungstabelleninformation ferner Inhaltszwischenspeicherungs-Verarbeitungsinformationen umfasst, die durch die Steuerung gemäß den Inhaltszwischenspeicherungs-Anforderungsinformationen erzeugt werden.

12. Verfahren nach Anspruch 11, wobei die durch den Verkehrsklassifizierer empfangenen Verkehrsklassifikations-Richtlinieninformationen Dienstverkehrsinformationen und eine Dienstketten-Weiterleitungstabellenkennung umfassen oder Dienstverkehrsinformationen, eine Inhaltskennung und eine Dienstketten-Weiterleitungstabellenkennung umfassen; und
das Senden des Inhaltspakets zu einem Switch, der mit Dienstknoten verbunden ist, der eine Inhaltszwischenspeicherungsfunktion aufweist, durch den Verkehrsklassifizierer gemäß den Verkehrsklassifikations-Richtlinieninformationen Folgendes umfasst:
Beschaffen der Dienstketten-Weiterleitungstabellenkennung in den Verkehrsklassifikations-Richtlinieninformationen durch den Verkehrsklassifizierer;
Einkapseln der Dienstketten-Weiterleitungstabellenkennung in einen Paketheader des Inhaltspakets durch den Verkehrsklassifizierer; und
Senden des eingekapselten Inhaltspakets zu dem Switch, der mit dem Dienstknoten verbunden ist, der eine Inhaltszwischenspeicherungsfunktion aufweist, durch den Verkehrsklassifizierer.

13. Verfahren nach Anspruch 12, das vor dem Beschaffen der Dienstketten-Weiterleitungstabellenkennung in den Verkehrsklassifikations-Richtlinieninformationen durch den Verkehrsklassifizierer Folgendes umfasst:
Beschaffen der Dienstverkehrsinformationen in dem Inhaltspaket durch den Verkehrsklassifizierer; und
Bestimmen der Verkehrsklassifikationsrichtlinie des Inhaltspakets durch den Verkehrsklassifizierer gemäß den Dienstverkehrsinformationen; oder
Beschaffen der Dienstverkehrsinformationen und der Inhaltskennung, die sich in dem Inhaltspaket befinden, durch den Verkehrsklassifizierer und
Bestimmen der Verkehrsklassifikations-Richtlinieninformationen des Inhaltspakets durch den Verkehrsklassifizierer gemäß den Dienstverkehrsinformationen und der Inhaltskennung.

## Revendications

1. Appareil (200) de mise en cache de contenu, comprenant :
un module d'acquisition (201), configuré pour acquérir des informations de demande de mise en cache de contenu envoyées par un serveur de contenu, et acquérir des informations d'identificateur d'un nœud de service ayant une fonction de mise en cache de contenu en fonction des informations de demande de mise en cache de contenu ;
un module de traitement (202), configuré pour construire des informations de politique de transfert de trafic et des informations de politique de classification de trafic en fonction des informations d'identificateur du nœud de service ayant une fonction de mise en cache de contenu, dans lequel le fait que le module de traitement (202) est configuré pour construire des informations de politique de transfert de trafic en fonction des informations d'identificateur du nœud de service ayant une fonction de mise en cache de contenu comprend : le module de traitement (202) est configuré pour construire des informations de table de transfert de chaîne de service qui comprennent les informations d'identificateur du nœud de service ayant une fonction de mise en cache de contenu, dans lequel les informations de table de transfert de chaîne de service sont utilisées pour indiquer, après qu'un commutateur a reçu un paquet de contenu, une destination suivante du paquet de contenu vers le commutateur et le module de traitement (202) est configuré pour construire les informations de politique de transfert de trafic, dans lequel les informations de politique de transfert de trafic comprennent les informations de table de transfert de chaîne de service, et le module de traitement (202) est en outre configuré pour générer des informations de traitement de mise en cache de contenu en fonction des informations de demande de mise en cache de contenu, dans lequel les informations de table de transfert de chaîne de service construites par le module de traitement comprennent en outre les informations de traitement de mise en cache de contenu ; et
un module d'envoi (203), configuré pour envoyer les informations de politique de classification de trafic à un classificateur de trafic, déclenchant le classificateur de trafic pour envoyer un paquet de contenu correspondant aux informations de demande de mise en cache de contenu au commutateur en fonction des informations de politique de classification de trafic ; et envoyer les informations de politique de transfert de trafic au commutateur, déclenchant, après réception du paquet de contenu, le commutateur pour envoyer, en fonction des informations de politique de transfert de trafic, le paquet de contenu au nœud de service ayant une fonction de mise en cache de contenu pour effectuer la mise en cache de contenu.

2. Appareil (200) selon la revendication 1, dans lequel :
les informations de demande de mise en cache de contenu acquises par le module d'acquisition (201) comprennent des informations d'identificateur du serveur de contenu, ou des informations d'identificateur du serveur de contenu et un identificateur de contenu ;
le module de traitement (202) est en outre configuré pour générer des informations de trafic de service en fonction des informations d'identificateur du serveur de contenu et d'informations d'adresse du nœud de service ayant une fonction de mise en cache de contenu ; dans lequel
les informations de politique de transfert de trafic construites par le module de traitement (202) comprennent la table de transfert de chaîne de service et les informations de trafic de service, ou les informations de table de transfert de chaîne de service, les informations de trafic de service et l'identificateur de contenu ; et
une politique de classification de trafic construite par le module de traitement (202) comprend les informations de trafic de service, ou les informations de trafic de service et l'identificateur de contenu.

3. Appareil (200) selon la revendication 2, dans lequel le module de traitement (202) est en outre configuré pour générer l'identificateur de table de transfert de chaîne de service en fonction des informations de trafic de service ou des informations de trafic de service et de l'identificateur de contenu ;
les informations de politique de transfert de trafic construites par le module de traitement (202) comprennent les informations de table de transfert de chaîne de service et l'identificateur de table de transfert de chaîne de service ; et
les informations de politique de classification de trafic construites par le module de traitement (202) comprennent les informations de trafic de service et l'identificateur de table de transfert de chaîne de service, ou les informations de trafic de service,
l'identificateur de contenu et l'identificateur de table de transfert de chaîne de service.

4. Appareil (200) selon la revendication 1, dans lequel le module d'envoi (203) est en outre configuré pour envoyer les informations de demande de mise en cache de contenu au nœud de service ayant une fonction de mise en cache de contenu, de sorte que le nœud de service construit des informations d'acquisition de protocole de transfert hypertexte, HTTP, en fonction des informations de demande de mise en cache de contenu, et demande à acquérir le paquet de contenu auprès du serveur de contenu.

5. Appareil (200) selon la revendication 1, dans lequel le fait que le module d'acquisition (201) soit configuré pour acquérir des informations de demande de mise en cache de contenu envoyées par un serveur de contenu comprend spécifiquement :
que le module d'acquisition (201) est spécifiquement configuré pour acquérir les informations de demande de mise en cache de contenu directement envoyées par le serveur de contenu ; ou
d'acquérir des informations de chaîne de service qui sont envoyées par le serveur de contenu en utilisant un système de gestion de chaîne de service, dans lequel les informations de chaîne de service comprennent les informations de demande de mise en cache de contenu.

6. Procédé de mise en cache de contenu, comprenant de :
recevoir, par un contrôleur, des informations de demande de mise en cache de contenu envoyées par un serveur de contenu ;
acquérir, par le contrôleur en fonction des informations de demande de mise en cache de contenu, des informations d'identificateur d'un nœud de service ayant une fonction de mise en cache de contenu ;
générer, par le contrôleur, des informations de traitement de mise en cache de contenu en fonction des informations de demande de mise en cache de contenu ;
construire, par le contrôleur, des informations de politique de transfert de trafic et des informations de politique de classification de trafic en fonction des informations d'identificateur du nœud de service ayant une fonction de mise en cache de contenu, dans lequel la construction, par le contrôleur, d'informations de politique de transfert de trafic en fonction des informations d'identificateur du nœud de service ayant une fonction de mise en cache de contenu comprend de : construire, par le contrôleur, des informations de table de transfert de chaîne de service qui comprennent les informations d'identificateur du nœud de service ayant une fonction de mise en cache de contenu, dans lequel les informations de table de transfert de chaîne de service sont utilisées pour indiquer, après qu'un commutateur a reçu un paquet de contenu, une destination suivante du paquet de contenu vers le commutateur et construire, par le contrôleur, les informations de politique de transfert de trafic, dans lequel les informations de politique de transfert de trafic comprennent les informations de table de transfert de chaîne de service, et dans lequel les informations de table de transfert de chaîne de service construites par le contrôleur comprennent en outre les informations de traitement de mise en cache de contenu ;
envoyer, par le contrôleur, les informations de politique de classification de trafic à un classificateur de trafic, déclenchant le classificateur de trafic pour envoyer un paquet de contenu correspondant aux informations de demande de mise en cache de contenu au commutateur en fonction des informations de politique de classification de trafic ; et
envoyer, par le contrôleur, des informations de politique de transfert de trafic au commutateur, déclenchant après réception du paquet de contenu, le commutateur pour envoyer, en fonction des informations de politique de transfert de trafic, le paquet de contenu au nœud de service ayant une fonction de mise en cache de contenu pour effectuer la mise en cache de contenu.

7. Procédé selon la revendication 6, dans lequel les informations de demande de mise en cache de contenu comprennent des informations d'identificateur du serveur de contenu, ou des informations d'identificateur du serveur de contenu et un identificateur de contenu ; et
avant la construction, par le contrôleur, des informations de politique de classification de trafic et des informations de politique de transfert de trafic qui comprennent les informations de table de transfert de chaîne de service, le procédé comprend en outre de :
générer, par le contrôleur, des informations de trafic de service en fonction des informations d'identificateur du serveur de contenu et d'informations d'adresse du nœud de service ayant une fonction de mise en cache de contenu, dans lequel les informations de politique de transfert de trafic construites par le contrôleur comprennent la table de transfert de chaîne de service et les informations de trafic de service, ou les informations de table de transfert de chaîne de service, les informations de trafic de service et l'identificateur de contenu ; et
une politique de classification de trafic construite par contrôleur comprend les informations de trafic de service, ou les informations de trafic de service et l'identificateur de contenu.

8. Procédé selon la revendication 7, dans lequel le procédé comprend en outre de :
générer, par le contrôleur, l'identificateur de table de transfert de chaîne de service en fonction des informations de trafic de service, ou des informations de chaîne de trafic de service et de l'identificateur de contenu, dans lequel
les informations de politique de transfert de trafic construites par le contrôleur comprennent les informations de table de transfert de chaîne de service et
l'identificateur de table de transfert de chaîne de service ; et
les informations de politique de classification de trafic construites par le contrôleur comprennent les informations de trafic de service et l'identificateur de table de transfert de chaîne de service, ou les informations de trafic de service, l'identificateur de contenu et l'identificateur de table de transfert de chaîne de service.

9. Procédé selon la revendication 6, dans lequel le procédé comprend en outre de :
envoyer, par le contrôleur, les informations de demande de mise en cache de contenu au nœud de service ayant une fonction de mise en cache de contenu, de sorte que le nœud de service construit des informations d'acquisition de protocole de transfert hypertexte, HTTP, en fonction des informations de demande de mise en cache de contenu, et demande à acquérir le paquet de contenu auprès du serveur de contenu.

10. Procédé selon la revendication 6, dans lequel la réception, par un contrôleur, d'informations de demande de mise en cache de contenu envoyées par un serveur de contenu comprend de :
recevoir, par le contrôleur, les informations de demande de mise en cache de contenu directement envoyées par le serveur de contenu ; ou
recevoir les informations de demande de mise en cache de contenu envoyées par le serveur de contenu en utilisant un système de gestion de chaîne de service.

11. Procédé de mise en cache de contenu, dans lequel le procédé comprend de :
recevoir, par un classificateur de trafic, des informations de politique de classification de trafic envoyées par un contrôleur, dans lequel
les informations de politique de classification de trafic sont construites par le contrôleur en fonction d'informations d'identificateur d'un nœud de service ayant une fonction de mise en cache de contenu ;
recevoir, par le classificateur de trafic, un paquet de contenu envoyé par un serveur de contenu ; et
envoyer, par le classificateur de trafic en fonction des informations de politique de classification de trafic, le paquet de contenu à un commutateur qui est connecté au nœud de service ayant une fonction de mise en cache de contenu déclenchant le commutateur pour envoyer, en fonction d'informations de politique de transfert de trafic, le paquet de contenu au nœud de service ayant une fonction de mise en cache de contenu pour effectuer la mise en cache de contenu, dans lequel les informations de politique de transfert de trafic sont construites par le contrôleur et envoyées par le contrôleur au commutateur, et dans lequel les informations de politique de transfert de trafic comprennent des informations de table de transfert de chaîne de service, construites par le contrôleur, qui comprennent les informations d'identificateur du nœud de service ayant une fonction de mise en cache de contenu, dans lequel les informations de table de transfert de chaîne de service sont utilisées pour indiquer, après que le commutateur a reçu un paquet de contenu, une destination suivante du paquet de contenu vers le commutateur, et les informations de table de transfert de chaîne de service comprennent en outre des informations de traitement de mise en cache de contenu, générées par le contrôleur, en fonction des informations de demande de mise en cache de contenu.

12. Procédé selon la revendication 11, dans lequel les informations de politique de classification de trafic reçues par le classificateur de trafic comprennent des informations de trafic de service et un identificateur de table de transfert de chaîne de service, ou comprennent des informations de trafic de service, un identificateur de contenu et un identificateur de table de transfert de chaîne de service ; et
l'envoi, par le classificateur de trafic en fonction des informations de politique de classification de trafic, du paquet de contenu à un commutateur qui est connecté au nœud de service ayant une fonction de mise en cache de contenu comprend de :
acquérir, par le classificateur de trafic, l'identificateur de table de transfert de chaîne de service dans les informations de politique de classification de trafic ;
encapsuler, par le classificateur de trafic, l'identificateur de table de transfert de chaîne de service dans un en-tête de paquet du paquet de contenu ; et
envoyer, par le classificateur de trafic, le paquet de contenu encapsulé au commutateur qui est connecté au nœud de service ayant une fonction de mise en cache de contenu.

13. Procédé selon la revendication 12, avant l'acquisition, par le classificateur de trafic, de l'identificateur de table de transfert de chaîne de service dans les informations de politique de classification de trafic, comprenant de :
acquérir, par le classificateur de trafic, les informations de trafic de service dans le paquet de contenu ; et
déterminer, par le classificateur de trafic, la politique de classification de trafic du paquet de contenu en fonction des informations de trafic de service ; ou
acquérir, par le classificateur de trafic, les informations de trafic de service et l'identificateur de contenu qui se trouvent dans le paquet de contenu, et
déterminer, par le classificateur de trafic, les informations de politique de classification de trafic du paquet de contenu en fonction des informations de trafic de service et de l'identificateur de contenu.
